(19) Europäisches Patentamt
European Patent Office
Office européen des brevets

(11) **EP 4 678 448 A1**

(12) **EUROPÄISCHE PATENTANMELDUNG**

(43) Veröffentlichungstag:
**14.01.2026 Patentblatt 2026/03**

(21) Anmeldenummer: **24188295.0**

(22) Anmeldetag: **12.07.2024**

(51) Internationale Patentklassifikation (IPC):
**B60K 17/28** [(2006.01)] **B60K 1/02** [(2006.01)]

(52) Gemeinsame Patentklassifikation (CPC):
**B60K 17/28; B60K 1/02**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Deere & Company**
**Moline, IL 61265 (US)**

(72) Erfinder:
• **Rajani, Krutin**
**Mannheim (DE)**
• **Mann, Manuel**
**Mannheim (DE)**

(74) Vertreter: **Stein, Stefan**
**John Deere GmbH & Co. KG**
**Global Intellectual Property Services**
**John-Deere-Straße 70**
**68163 Mannheim (DE)**

(54) **ANTRIEBSANORDNUNG, ACHSE UND ARBEITSMASCHINE**

(57) Die Erfindung betrifft eine Antriebsanordnung (22) für eine Arbeitsmaschine (10). Die Antriebsanordnung (22) umfasst eine erste und eine zweite Energiemaschine (40, 42) und einen Fahrantrieb (44) und einen ersten Leistungsausgang (46). Die erste Energiemaschine (40) ist mit dem Fahrantrieb (44) und die zweite Energiemaschine (42) mit dem ersten Leistungsausgang (46) verbunden, wenn eine Drehzahl ($n$) der ersten Energiemaschine (40) kleiner als ein oder gleich einem Drehzahlschwellwert ($n_{schwell}$) ist, und die zweite Energiemaschine (42) ist mit dem Fahrantrieb (44) verbunden, wenn eine Drehzahl ($n$) der ersten Energiemaschine (40) grösser als der Drehzahlschwellwert ($n_{schwell}$) ist. Die Erfindung betrifft weiter eine Achse (100) und eine Arbeitsmaschine (10).

FIG. 1

EP 4 678 448 A1

## Beschreibung

Die Erfindung betrifft eine Antriebsanordnung gemäss dem Oberbegriff des unabhängigen Anspruchs 1, eine Achse gemäss dem Oberbegriff des unabhängigen Anspruchs 11 und eine Arbeitsmaschine gemäss dem Oberbegriff des unabhängigen Anspruchs 12.

Arbeitsmaschinen, bevorzugt Baumaschinen oder landwirtschaftliche Arbeitsfahrzeuge, besondere bevorzugt landwirtschaftliche Zugfahrzeuge oder Ackerschlepper, werden üblicherweise durch Verbrennungsmotoren angetrieben. Der Verbrennungsmotor kann dabei eine oder mehrere Achsen der Arbeitsmaschine, insbesondere eine Hinterachse und/oder eine Vorderachse antreiben. Der Antrieb der Achse(n) erfolgt für gewöhnlich von der Kurbelwelle des Verbrennungsmotors über ein Getriebe mit veränderbarer Übersetzung und einem oder mehrere Fahrantrieben, insbesondere eines oder mehrere Differenzialgetriebe. Der Fahrantrieb, insbesondere das Differenzialgetriebe, kann abtriebsseitig mit den Wellen der Räder, insbesondere der Vorder- und/oder Hinterräder, in Antriebsverbindung stehen.

Ebenso kann der Verbrennungsmotor zusätzlich einen ersten Leistungsausgang, insbesondere einen mechanische Leistungsausgang, antreiben. Im Speziellen kann der Verbrennungsmotor eine Zapfwelleneinheit, insbesondere eine Zapfwelle, antreiben. Die Zapfwelleneinheit kann sich an einer Rückseite der Arbeitsmaschine befinden, insbesondere in der Nachbarschaft einer Anbauschnittstelle für Arbeitsgeräte.

Derzeit liegen Vorschläge vor, derartige Arbeitsmaschinen durch Elektromotoren anzutreiben, insbesondere als rein batteriegetriebene Fahrzeuge. Eine fachübliche, naheliegende Vorgehensweise würde den bisherigen (mit einer in Längsrichtung verlaufenden, nunmehr jedoch elektromotorisch angetriebenen Welle und einem Differenzialgetriebe aufgebauten) Antriebsstrang auf derartige Fahrzeuge übertragen, wie in der US 2023/0227106 A1 gezeigt. Die DE 10 2008 032 848 A1 zeigt eine Achse für eine Arbeitsfahrzeug, insbesondere ein Flurförderfahrzeug, mit einem Differenzialgetriebe, das abtriebsseitig mit den Wellen der Hinterräder in Antriebsverbindung steht. Der Antrieb des Differenzialgetriebes erfolgt durch einen Elektromotor über eine Hohlwelle, die eine der Wellen der Hinterräder koaxial umschließt. Die Hohlwelle wird ihrerseits über einen als Innenläufer aufgeführten Elektromotor angetrieben, der um die Hohlwelle herum angebracht ist. Eine ähnliche Anordnung für einen Achsantrieb eines Kraftfahrzeugs, jedoch mit einem Zahnradgetriebe zwischen dem Elektromotor und der Hohlwelle und einem Schaltgetriebe zwischen der Hohlwelle und dem Differenzialgetriebe, zeigt die DE 10 2020 114 063 A1.

Die Zapfwelle wird im Stand der Technik durch den Verbrennungsmotor angetrieben, wobei zur Drehzahleinstellung ein Überlagerungsgetriebe verwendet werden kann, das mit einem zusätzlichen Elektromotor gekoppelt ist (DE 10 2017 205 149 A1, EP 1 466 773 A2). Bei rein elektrischen Antrieben wurde vorgeschlagen, die Zapfwelle durch einen ersten Elektromotor anzutreiben, der durch ein Überlagerungsgetriebe mit dem Fahrantrieb verbunden ist, während das Überlagerungsgetriebe zudem durch einen weiteren Elektromotor angetrieben wird (DE 10 2019 106 294 A1).

Nachteil der bekannten Antriebsanordnungen ist, dass diese nicht lastschaltbar sind, insbesondere nicht nahtlos (engl. seamless) schaltbar sind, und/oder nicht eine ausreichende Anzahl an Gängen für den Fahrantrieb und/oder den ersten Leistungsausgang aufweisen. Darüber hinaus ist nachteilig, dass die bekannten Antriebsanordnungen konstruktiv zu kompliziert oder komplex ausgestaltet sind.

Ausgehend von diesem Stand der Technik ist es eine Aufgabe der vorliegenden Erfindung eine Antriebsanordnung, eine Achse und eine Arbeitsmaschine vorzuschlagen, welche die aus dem Stand der Technik bekannten Nachteile weitgehend vermeiden. Der vorliegenden Erfindung liegt daher insbesondere die Aufgabe zugrunde eine Antriebsanordnung, eine Achse und eine Arbeitsmaschine vorzuschlagen, durch welche die vorgenannten Probleme überwunden werden. Im Speziellen eine Antriebsanordnung, eine Achse und eine Arbeitsmaschine vorzuschlagen, die konstruktiv einfach ausgestaltet sind und/oder mehrere Gänge aufweisen und/oder für weniger aufwändig ausgestaltet sind und/oder bevorzugt nahtlos bzw. synchronisiert schaltbar sind.

Diese Aufgabe wird durch eine Antriebsanordnung mit den Merkmalen des Anspruchs 1 und eine Achse mit den Merkmalen des Anspruchs 11 und eine Arbeitsmaschine mit den Merkmalen des Anspruchs 12 gelöst. Die abhängigen Ansprüche beziehen sich auf besonders vorteilhafte Ausführungsformen der Erfindung.

Erfindungsgemäss wird eine Antriebsanordnung für eine Arbeitsmaschine vorgeschlagen. Im Speziellen wird insbesondere eine Antriebsanordnung für eine Achse einer Arbeitsmaschine, bevorzugt eine elektrisch angetriebene Achse einer Arbeitsmaschine vorgeschlagen. Die Antriebsanordnung umfasst eine erste und eine zweite Energiemaschine. Die Antriebsanordnung umfasst ausserdem einen Fahrantrieb und einen ersten Leistungsausgang. Die erste Energiemaschine, insbesondere nur die erste Energiemaschine, ist mit dem Fahrantrieb und die zweite Energiemaschine, insbesondere nur die zweite Energiemaschine, ist mit dem ersten Leistungsausgang verbunden, wenn ein Drehmoment der ersten Energiemaschine kleiner als der oder gleich dem Drehmomentschwellwert ist und/oder eine Drehzahl der ersten Energiemaschine kleiner als der oder gleich dem Drehzahlschwellwert ist, bevorzugt wenn ein Drehmoment der ersten Energiemaschine kleiner als der Drehmomentschwellwert ist und/oder eine Drehzahl der ersten Energiemaschine kleiner als der Drehzahlschwellwert ist. Alternativ oder zusätzlich ist die zweite Energiemaschine, insbesondere nur die zweite Energiemaschine, mit dem Fahrantrieb verbunden, wenn ein Drehmoment der ersten Energiemaschine grösser als der Drehmomentschwellwert ist und/oder eine Drehzahl der ersten Energiemaschine grösser als der Drehzahlschwellwert ist.

Die erste und/oder zweite Energiemaschine können als Elektromotoren, insbesondere als ein erster und zweiter Elektromotor ausgebildet sein. Alternativ oder zusätzlich können die erste und/oder zweite Energiemaschine als Brennstoffzelle, insbesondere als eine erste und zweite Brennstoffzelle ausgebildet sein. Die erste und/oder zweite Energiemaschine können aber auch eine mit Gleichstrom und/oder Drehstrom betriebene Synchron- und/oder Asynchronmaschine mit permanenter und/oder elektrischer Erregung, besonders bevorzugt eine permanenterregte Drehstrom-Synchronmaschine sein. Die erste und zweite Energiemaschine können motorisch oder generatorisch betreibbar sein. Die erste und zweite Energiemaschine können die Antriebsanordnung, insbesondere den Fahrantrieb und/oder den ersten Leistungsausgang, mit einer Drehzahl und/oder einer Kraft und/oder einem Drehmoment antreiben. Die erste Energiemaschine, insbesondere der erste Elektromotor, kann eine erste Antriebswelle umfassen. Die zweite Energiemaschine, insbesondere der zweite Elektromotor, kann ein zweite Antriebswelle umfassen.

Die Antriebsanordnung, insbesondere die Achse oder die Arbeitsmaschine, kann einen oder mehrere Energiespeicher umfassen. Der oder die Energiespeicher kann mit der ersten und/oder der zweiten Energiemaschine verbunden und/oder koppelbar sein, insbesondere elektrisch verbunden und/oder elektrisch koppelbar sein. Der Energiespeicher kann ein elektrischer Energiespeicher sein. Der Energiespeicher kann die angeschlossene(n) Energiemaschine(n) mit Energie, insbesondere elektrischer Energie versorgen. Der Energiespeicher kann als eine Batterie und/oder ein Akku und/oder eine Superkondensator und/oder eine Brennstoffzelle und/oder eine sonstige Vorrichtung zur Speicherung von elektrischer Energie ausgebildet sein.

Unter verbunden kann bevorzugt mechanisch verbunden, besonders bevorzugt antreibbar verbunden, also drehmoment- und/oder drehzahlübertragend verbunden, und/oder gekoppelt oder koppelbar, also mechanisch gekoppelt und/oder starr gekoppelt oder mechanisch koppelbar verstanden werden. Unter mechanisch verbunden, bevorzugt unter antreibbar verbunden und/oder gekoppelt oder koppelbar bzw. mechanisch gekoppelt und/oder starr gekoppelt oder mechanisch koppelbar kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen.

Der Fahrantrieb kann eine erste Ausgangswelle umfassen und/oder als erste Ausgangswelle ausgebildet sein. Ebenso kann der Fahrantrieb ein Differenzialgetriebe und die erste Ausgangswelle umfassen. Dabei kann das Differenzialgetriebe antriebsseitig mit der ersten Ausgangswelle verbunden sein. Ausserdem kann das Differenzialgetriebe abtriebsseitig mit einer linken Welle und einer rechten Welle zum Antrieb von Bodeneingriffsmitteln der Achse verbunden sein. Die erste Ausgangswelle kann als eine Hohlwelle ausgebildet sein, die insbesondere die linke und/oder rechte Welle teilweise oder vollständig umschliesst.

Der erste Leistungsausgang kann eine zweite Ausgangswelle umfassen und/oder als zweite Ausgangswelle ausgebildet sein. Ebenso kann der erste Leistungsausgang zusätzlich eine Zapfwelleneinheit umfassen. Die Zapfwelleneinheit kann ein Zapfwellengetriebe und/oder eine Zapfwelle umfassen. Die Zapfwelleneinheit, insbesondere das Zapfwellengetriebe, kann antriebsseitig mit der zweiten Ausgangswelle verbunden sein. Ausserdem kann die Zapfwelleneinheit, insbesondere das Zapfwellengetriebe, abtriebsseitig mit der Zapfwelle verbindbar oder verbunden sein.

Aufgrund der Einteilung, dass das Drehmoment der ersten Energiemaschine kleiner als der Drehmomentschwellwert oder grösser als der bzw. gleich dem Drehmomentschwellwert sein kann und/oder die Drehzahl der ersten Energiemaschine kleiner oder grösser als der bzw. gleich dem Drehzahlschwellwert sein kann, werden zwei Modi der Antriebsanordnung und/oder der Arbeitsmaschine definiert. Mit anderen Worten, es werden zwei Geschwindigkeitsbereiche der Antriebsanordnung und/oder der Arbeitsmaschine definiert.

Der erste Modus oder der erste Geschwindigkeitsbereich liegt vor, wenn das Drehmoment der ersten Energiemaschine kleiner als der oder gleich dem Drehmomentschwellwert ist und/oder die Drehzahl der ersten Energiemaschine kleiner als der oder gleich dem Drehzahlschwellwert ist, also wenn gilt:

$$n \leq n_{schwell} \text{ und/oder } T \leq T_{schwell}$$

oder wenn das Drehmoment der ersten Energiemaschine kleiner als der Drehmomentschwellwert ist und/oder die Drehzahl der ersten Energiemaschine kleiner als der Drehzahlschwellwert ist, also wenn gilt:

$$n < n_{schwell} \text{ und/oder } T < T_{schwell}$$

mit

$n$ = Drehzahl der ersten Energiemaschine

$n_{schwell}$ = Drehzahlschwellwert, insbesondere die max. Drehzahl der ersten Energiemaschine

$T$ = Drehmoment der ersten Energiemaschine

$T_{schwell}$ = Drehmomentschwellwert, insbesondere das max. Drehmoment der ersten Energiemaschine

Ein Schaltpunkt kann vorliegen, wenn $n = n_{schwell}$ und/oder $T = T_{schwell}$ gilt. Entspricht die Drehzahl $n$ der ersten Energiemaschine also dem Drehzahlschwellwert $n_{schwell}$ , gilt also insbesondere $n = n_{schwell}$, und/oder entspricht das Drehmoment $T$ dem Drehmomentschwellwert $T_{schwell}$, gilt also $T = T_{schwell}$, erfolgt ein Gangwechsel, insbesondere ein synchronisierter Gangwechsel in den zweiten Modus oder den zweiten Geschwindigkeitsbereich. Der Gangwechsel kann unter Volllast und ohne Unterbrechung der Zugkraft erfolgen, und insbesondere nahtlos (engl. Seamless) erfolgen. Die erste und zweite Energiemaschine können im Schaltpunkt die gleiche Drehzahl aufweisen, also insbesondere wenn $n = n_{schwell}$ und/oder $T = T_{schwell}$ gilt. Aufgrund der nahtlosen Schaltung können Vibrationen und/oder ein Schütteln (engl. Shift-Shock) der Antriebsanordnung vermieden werden.

Der zweite Modus oder der zweite Geschwindigkeitsbereich liegt vor, wenn das Drehmoment der ersten Energiemaschine grösser als der Drehmomentschwellwert ist und/oder die Drehzahl der ersten Energiemaschine grösser als der Drehzahlschwellwert ist, also wenn gilt:

$$n > n_{schwell} \text{ und/oder } T > T_{schwell}$$

Im ersten Modus oder dem ersten Geschwindigkeitsbereich gilt folgendes, insbesondere kann im ersten Modus oder dem ersten Geschwindigkeitsbereich die Antriebsanordnung wie folgt betreibbar sein:

- Die erste Energiemaschine, insbesondere nur die erste Energiemaschine, ist mit dem Fahrantrieb verbunden, insbesondere gekoppelt und der Fahrantrieb mit der ersten Energiemaschine antreibbar. Die erste Energiemaschine kann somit als einzige Maschine Drehmoment und/oder Drehzahl, also insbesondere auch Traktion, für den Fahrantrieb bereitstellen. Dadurch kann vorteilhafterweise die Antriebsanordnung, und insbesondere bei niedrigen Geschwindigkeiten ($n \leq n_{schwell}$ oder $n < n_{schwell}$ und/oder $T \leq T_{schwell}$ oder $T < T_{schwell}$) die Arbeitsmaschine, mit einem konstanten Einzelübersetzungsverhältnis verwendet werden. Ausserdem kann ein hohes Traktionsmoment und eine hohe Zugkraft der Arbeitsmaschine bei niedrigen Geschwindigkeiten ermöglicht werden.
- Die zweite Energiemaschine, insbesondere nur die zweite Energiemaschine, ist mit dem ersten Leistungsausgang verbunden, insbesondere gekoppelt und der ersten Leistungsausgang mit der zweiten Energiemaschine antreibbar. Diese kann dadurch vorteilhafterweise als einzige Maschine Drehmoment und/oder Drehzahl für den ersten Leistungsausgang bereitstellen.

Im zweiten Modus oder dem ersten Geschwindigkeitsbereich gilt folgendes, insbesondere kann im zweiten Modus oder dem zweiten Geschwindigkeitsbereich die Antriebsanordnung wie folgt betreibbar sein:

- Die zweite Energiemaschine, insbesondere nur die zweite Energiemaschine, ist mit dem Fahrantrieb verbunden, insbesondere gekoppelt und der Fahrantrieb mit der zweiten Energiemaschine antreibbar. Die erste Energiemaschine kann vom Fahrantrieb entkoppelt sein.
- Ab dieser Drehzahl und/oder diesem Drehmoment stellt die erste Energiemaschine kein Drehmoment und/oder Drehzahl, also insbesondere keine Traktion, mehr für den Fahrantrieb bereit und nur die zweite Energiemaschine stellt das Drehmoment und/oder die Drehzahl, also insbesondere die vollständige Traktion für den Fahrantrieb bereit.
- Zusätzlich kann die erste Energiemaschine, insbesondere nur die erste Energiemaschine, mit dem ersten Leistungsausgang verbunden sein, insbesondere gekoppelt und der ersten Leistungsausgang mit der ersten Energiemaschine antreibbar sein. Diese kann dadurch vorteilhafterweise als einzige Maschine Drehmoment und/oder Drehzahl für den ersten Leistungsausgang bereitstellen. Je nach gewählten Übersetzungsverhältnissen, kann dadurch vorteilhafterweise auch eine synchronisierte Schaltung des ersten Leistungsausgangs erreicht werden.

Mit anderen Worten, die Antriebsanordnung oder die Arbeitsmaschine oder die Achse kann eine Steuereinheit umfassen. Die Steuereinheit kann mit der ersten und zweiten Energiemaschine signalverbunden und/oder wirkend gekoppelt und/oder signalübertragend und/oder datenleitend verbunden sein. Die Steuereinheit kann konfiguriert sein, eines oder mehrere Drehzahlsignale und/oder Drehmomentsignale von der Antriebsanordnung, insbesondere von Drehzahl- und/oder Drehmomentsensoren der Antriebsanordnung, und/oder der ersten und/oder zweiten Energiemaschine zu empfangen. Die Steuereinheit kann konfiguriert sein, eine Drehzahl und/oder ein Drehmoment mit dem Drehzahlsignal und/oder dem Drehmomentsignal zu ermitteln. Die Steuereinheit kann konfiguriert sein, die ermittelte Drehzahl und/oder das ermittelte Drehmoment mit dem Drehzahlschwellwert $n_{schwell}$ und/oder dem Drehmomentschwellwert $T_{schwell}$ zu vergleichen. Die Steuereinheit kann konfiguriert sein, die Drehzahl und/oder das Drehmoment der Antriebsanordnung, insbesondere der ersten und zweiten Energiemaschine einzustellen und/oder zu verstellen, insbesondere auch zu betreiben. Die Steuereinheit kann konfiguriert sein, die Antriebsanordnung, insbesondere die erste und zweite Energiemaschine, in Abhängigkeit von der Drehzahl und/oder dem Drehmoment in den ersten oder zweiten Modus einzustellen und/oder zu verstellen, insbesondere im ersten oder zweiten Modus zu betreiben. Die Steuereinheit kann konfiguriert sein, die Antriebsanordnung, insbesondere die erste und zweite Energiemaschine, in Abhängigkeit von der Drehzahl und/oder dem Drehmoment in den ersten Modus einzustellen und/oder zu verstellen, insbesondere im ersten Modus zu betreiben, wenn das Drehmoment der ersten Energiemaschine kleiner als der oder gleich dem Drehmomentschwellwert ist und/oder die Drehzahl der ersten Energiemaschine kleiner als der oder gleich dem Drehzahlschwellwert ist, bevorzugt wenn das Drehmoment der ersten Energiemaschine kleiner als der Drehmomentschwellwert ist und/oder die Drehzahl der ersten Energiemaschine kleiner als der Drehzahlschwellwert ist. Alternativ oder zusätzlich, kann die Steuereinheit konfiguriert sein, die Antriebsanordnung, insbesondere die erste und zweite Energiemaschine, in Abhängigkeit von der Drehzahl und/oder dem Drehmoment in den zweiten Modus einzustellen und/oder zu verstellen, insbesondere im zweiten Modus zu betreiben, wenn das Drehmoment der ersten Energiemaschine grösser als der oder gleich dem Drehmomentschwellwert ist und/oder die Drehzahl der ersten Energiemaschine grösser als der oder gleich dem Drehzahlschwellwert ist. Die Steuereinheit kann konfiguriert sein, die Antriebsanordnung und somit auch die Achse oder die Arbeitsmaschine in Abhängigkeit von der Drehzahl und/oder dem Drehmoment der ersten Energiemaschine und/oder dem Drehmomentschwellwert und/oder dem Drehzahlschwellwert einzustellen und/oder zu verstellen und/oder anzusteuern, bevorzugt also auch zu steuern und zu regeln, besonders bevorzugt den Modus einzustellen und/oder zu verstellen.

Wesentlich für die Erfindung ist, dass die Antriebsanordnung somit einen Fahrantrieb und einen ersten Leistungsausgang, bevorzugt einen ersten mechanischen Leistungsausgang und einen mechanischen Fahrantrieb, besonders bevorzugt einen elektrisch angetriebene ersten mechanischen Leistungsausgang und einen elektrisch angetriebene ersten mechanischen Fahrantrieb umfasst. Die erste und zweite Energiemaschine können sowohl den Fahrantrieb als auch den ersten Leistungsausgang in Abhängigkeit von der Drehzahl und/oder dem Drehmoment, insbesondere der ersten Energiemaschine, abwechselnd antreiben. Dadurch können mehrere Gänge mit der jeweils gewünschten Drehzahl und/oder Drehmoment für die Antriebsanordnung bereitgestellt werden. Ausserdem wird vorteilhafterweise ein synchronisiertes Schalten von Gängen wie bei einem zweistufigen Getriebe ermöglicht, ohne dass tatsächlich ein zweiter Gang für eine der Energiemaschinen erforderlich ist. Vorteilhafterweise kann auch ein nahtloses Schalten von Gängen realisiert werden. Auf ein Getriebe mit veränderbarem Übersetzungsverhältnis kann verzichtet werden. Auf diese Weise erhält man ausserdem vorteilhafterweise einen kompakten Aufbau der Antriebsanordnung. Aufgrund der nahtlosen Schaltung können Vibrationen und/oder ein Schütteln (engl. Shift-Shock) der Antriebsanordnung vermieden werden.

In Ausgestaltung der Erfindung, ist die zweite Energiemaschine mit dem Fahrantrieb und dem ersten Leistungsausgang verbunden, wenn das Drehmoment der ersten Energiemaschine grösser als der Drehmomentschwellwert ist und/oder die Drehzahl der ersten Energiemaschine grösser als der Drehzahlschwellwert ist. Die zweite Energiemaschine kann also zusätzlich mit dem Fahrantrieb und dem ersten Leistungsausgang verbunden sein und beide antreiben.

Dadurch kann vorteilhafterweise der erste Leistungsausgang auch im zweiten Modus betrieben werden. Die Drehzahl am ersten Leistungsausgang kann dabei von der Drehzahl am Fahrantrieb abhängig sein, insbesondere identisch sein. Die Antriebsanordnung weist die oben genannten Vorteile auf.

In Ausgestaltung der Erfindung, umfasst die Antriebsanordnung eine erste und zweite Koppeleinrichtung. Die erste Energiemaschine ist mit der ersten Koppeleinrichtung verbunden. Ausserdem ist die erste Energiemaschine mit der ersten Koppeleinrichtung oder über die erste Koppeleinrichtung mit dem Fahrantrieb verbindbar oder verbunden, insbesondere auch lösbar verbunden. Dazu kann die erste Antriebswelle mit der ersten Koppeleinrichtung verbunden sein. Alternativ oder zusätzlich ist die zweite Energiemaschine mit der zweiten Koppeleinrichtung verbunden. Ausserdem ist die zweite Energiemaschine mit der zweiten Koppeleinrichtung oder über die zweite Koppeleinrichtung mit dem ersten Leistungsausgang verbindbar oder verbunden, insbesondere auch lösbar verbunden. Dazu kann die zweite Antriebswelle mit der zweiten Koppeleinrichtung verbunden sein. Die erste Koppeleinrichtung kann mit der ersten Ausgangswelle verbindbar oder verbunden sein. Die zweite Koppeleinrichtung kann mit der zweiten Ausgangswelle verbindbar oder verbunden sein.

Die erste und zweite Koppeleinrichtung können jeweils zwischen einer ersten Position, insbesondere einem geschlossenen oder verbundenem oder gekoppelten Zustand, und einer zweiten Position, insbesondere einem geöffneten oder nicht verbundenem oder entkoppelten Zustand, bewegbar sein. In der ersten Position kann die jeweilige Koppeleinrichtungen mit einer anderen Komponente, beispielsweise der ersten oder zweiten Ausgangswelle verbunden sein. In der zweiten Position kann die jeweilige Koppeleinrichtungen mit der anderen Komponente, beispielsweise der ersten oder zweiten Ausgangswelle, nicht verbunden sein, also von dieser gelöst sein.

Die erste Energiemaschine kann mit der ersten oder durch die erste Koppeleinrichtung in der ersten Position mit dem Fahrantrieb, insbesondere der ersten Ausgangswelle verbunden sein, und in der zweiten Position nicht mit dem Fahrantrieb, insbesondere der ersten Ausgangswelle, verbunden, also entkoppelt sein. Die zweite Energiemaschine kann mit der zweiten oder durch die zweite Koppeleinrichtung in der ersten Position mit dem ersten Leistungsausgang, insbesondere der zweiten Ausgangswelle, verbunden sein, und in der zweiten Position nicht mit dem ersten Leistungsausgang, insbesondere der zweiten Ausgangswelle, verbunden, also entkoppelt sein.

Die erste und/oder zweite Koppeleinrichtung kann als eine Kupplung oder Synchronisierung ausgebildet sein, beispielsweise als eine oder eine Schaltkupplung oder eine Lamellenkupplung oder eine Synchronkupplung oder eine schaltbare Freilaufkupplung.

Die Antriebsanordnung kann eine erste Übersetzungsstufe, insbesondere eine erste Stirnradstufe oder einen ersten Zahnradsatz oder ein erstes Zahnradpaar oder einen ersten Planetensatz umfassen. Die erste Energiemaschine kann durch die erste oder mit der ersten Übersetzungsstufe mit der ersten Koppeleinrichtung verbunden sein. Die Antriebsanordnung kann eine zweite Übersetzungsstufe, insbesondere eine zweite Stirnradstufe oder einen zweiten Zahnradsatz oder ein zweites Zahnradpaar oder einen zweiten Planetensatz umfassen. Die zweite Energiemaschine kann durch die zweite oder mit der zweiten Übersetzungsstufe mit der zweiten Koppeleinrichtung verbunden sein.

Die erste und zweite Koppeleinrichtung können mit der Steuereinheit signalverbunden und/oder wirkend gekoppelt und/oder signalübertragend und/oder datenleitend verbunden sein. Im Speziellen kann die Antriebsanordnung ein erstes Ventil oder eine erste Ventilanordnung, insbesondere ein erstes Steuerventil, oder einen ersten Aktuator zum Ansteuern und/oder Einstellen und/oder Verstellen der ersten Koppeleinrichtung umfassen. Das erste Ventil oder die erste Ventilanordnung oder der erste Aktuator können mit der ersten Koppeleinrichtung verbunden sein. Ebenso kann die Antriebsanordnung ein zweites Ventil oder eine zweite Ventilanordnung, insbesondere ein zweites Steuerventil, oder einen zweiten Aktuator zum Ansteuern und/oder Einstellen und/oder Verstellen der zweiten Koppeleinrichtung umfassen. Das zweite Ventil oder die zweite Ventilanordnung oder der zweite Aktuator können mit der zweite Koppeleinrichtung verbunden sein.

Die Steuereinheit kann mit dem ersten und/oder zweiten Ventil oder der ersten und/oder zweiten Ventilanordnung oder dem ersten und/oder zweiten Aktuator signalverbunden und/oder wirkend gekoppelt und/oder signalübertragend und/oder datenleitend verbunden sein. Die Steuereinheit kann konfiguriert sein, die erste Koppeleinrichtung, insbesondere über das oder mit dem ersten Ventil oder die erste Ventilanordnung oder den ersten Aktuator, anzusteuern und/oder einzustellen und/oder zu verstellen. Die Steuereinheit kann konfiguriert sein, die erste Koppeleinrichtung, insbesondere über das oder mit dem ersten Ventil oder die erste Ventilanordnung oder den ersten Aktuator, in die erste oder zweite Position einzustellen und/oder zu verstellen, insbesondere auch von der ersten in die zweite Position zu bewegen und umgekehrt. Die Steuereinheit kann konfiguriert sein, die zweite Koppeleinrichtung, insbesondere über das oder mit dem zweiten Ventil oder die zweite Ventilanordnung oder den zweiten Aktuator, anzusteuern und/oder einzustellen und/oder zu verstellen. Die Steuereinheit kann konfiguriert sein, die zweite Koppeleinrichtung, insbesondere über das oder mit dem zweiten Ventil oder die zweite Ventilanordnung oder den zweiten Aktuator, in die erste oder zweite Position einzustellen und/oder zu verstellen, insbesondere auch von der ersten in die zweite Position zu bewegen und umgekehrt. Die Antriebsanordnung weist die oben genannten Vorteile auf.

Der Antriebsanordnung können weitere Gänge und Koppeleinrichtungen hinzugefügt werden, sodass eine n-Gang-synchronisierte bzw. nahtlose Antriebsanordnung realisiert werden kann. verallgemeinert werden. Bei einem nahtlosen n-Gang-Getriebe mit x- Schaltungen für den ersten Leistungsausgang bei Durchführung der verschiedenen Schaltvorgänge ist die Anzahl der Koppeleinrichtungen wie folgt angegeben:

$$\text{Anzahl der Koppeleinrichtungen} = n + x + 1$$

Mit

n = Anzahl der Gänge des Fahrantriebs
x = Anzahl der Gänge für den ersten Leistungsausgang

In Ausgestaltung der Erfindung umfasst die Antriebsanordnung eine dritte Koppeleinrichtung und die zweite Energiemaschine ist mit der dritten Koppeleinrichtung verbunden. Ausserdem ist die zweite Energiemaschine mit der oder durch die dritte Koppeleinrichtung mit dem Fahrantrieb verbindbar oder verbunden, insbesondere auch lösbar verbunden. Die dritte Koppeleinrichtung kann mit der ersten Ausgangswelle verbindbar oder verbunden sein. Zusätzlich oder alternativ kann die Antriebsanordnung eine vierte Koppeleinrichtung umfassen und die erste Energiemaschine ist mit der vierten Koppeleinrichtung verbunden. Ausserdem ist die erste Energiemaschine mit der oder durch die vierte Koppeleinrichtung mit dem ersten Leistungsausgang verbindbar oder verbunden, insbesondere auch lösbar verbunden. Die vierte Koppeleinrichtung kann mit der zweiten Ausgangswelle verbindbar oder verbunden sein.

Die dritte und vierte Koppeleinrichtung können jeweils zwischen einer ersten Position, insbesondere einem geschlossenen oder verbundenem oder gekoppelten Zustand, und einer zweiten Position, insbesondere einem geöffneten oder nicht verbundenem oder entkoppelten Zustand, bewegbar sein. In der ersten Position kann die jeweilige Koppeleinrichtungen mit einer anderen Komponente, beispielsweise der ersten oder zweiten Ausgangswelle, verbunden sein. In der zweiten Position kann die jeweilige Koppeleinrichtungen mit der anderen Komponente, beispielsweise der ersten oder zweiten Ausgangswelle, nicht verbunden sein, also von dieser gelöst sein.

Die erste Energiemaschine kann mit der vierten oder durch die vierte Koppeleinrichtung in der ersten Position mit dem ersten Leistungsausgang, insbesondere der zweiten Ausgangswelle verbunden sein, und in der zweiten Position nicht mit dem ersten Leistungsausgang, insbesondere der zweiten Ausgangswelle, verbunden, also entkoppelt sein. Die zweite Energiemaschine kann mit der dritten oder durch die dritte Koppeleinrichtung in der ersten Position mit dem Fahrantrieb, insbesondere der ersten Ausgangswelle, verbunden sein, und in der zweiten Position nicht mit dem Fahrantrieb, insbesondere der ersten Ausgangswelle, verbunden, also entkoppelt sein.

Die dritte und/oder vierte Koppeleinrichtung kann als eine Kupplung oder Synchronisierung ausgebildet sein, beispielsweise als eine oder eine Schaltkupplung oder eine Lamellenkupplung oder eine Synchronkupplung oder eine schaltbare Freilaufkupplung.

Die Antriebsanordnung kann eine dritte Übersetzungsstufe, insbesondere eine dritte Stirnradstufe oder einen dritten Zahnradsatz oder ein drittes Zahnradpaar oder einen dritten Planetensatz umfassen. Die zweite Energiemaschine kann durch die dritte oder mit der dritten Übersetzungsstufe mit der dritten Koppeleinrichtung verbunden sein. Die Antriebsanordnung kann eine vierte Übersetzungsstufe, insbesondere eine vierte Stirnradstufe oder einen vierten Zahnradsatz oder ein viertes Zahnradpaar oder einen vierten Planetensatz umfassen. Die erste Energiemaschine kann durch die vierte oder mit der vierten Übersetzungsstufe mit der vierten Koppeleinrichtung verbunden sein.

Die dritte und/oder vierte Koppeleinrichtung können mit der Steuereinheit signalverbunden und/oder wirkend gekoppelt und/oder signalübertragend und/oder datenleitend verbunden sein. Im Speziellen kann die Antriebsanordnung ein drittes Ventil oder eine dritte Ventilanordnung, insbesondere ein drittes Steuerventil, oder einen dritten Aktuator zum Ansteuern und/oder Einstellen und/oder Verstellen der dritten Koppeleinrichtung umfassen. Das dritte Ventil oder die dritte Ventilanordnung oder der dritte Aktuator können mit der dritten Koppeleinrichtung verbunden sein. Ebenso kann die Antriebsanordnung ein viertes Ventil oder eine vierte Ventilanordnung, insbesondere ein viertes Steuerventil, oder einen vierten Aktuator zum Ansteuern und/oder Einstellen und/oder Verstellen der vierten Koppeleinrichtung umfassen. Das vierte Ventil oder die vierte Ventilanordnung oder der vierte Aktuator können mit der vierten Koppeleinrichtung verbunden sein.

Die Steuereinheit kann mit dem dritten und/oder vierten Ventil oder der dritten und/oder vierten Ventilanordnung oder dem dritten und/oder vierten Aktuator signalverbunden und/oder wirkend gekoppelt und/oder signalübertragend und/oder datenleitend verbunden sein. Die Steuereinheit kann konfiguriert sein, die dritte Koppeleinrichtung, insbesondere über das oder mit dem dritten Ventil oder die dritte Ventilanordnung oder den dritten Aktuator, anzusteuern und/oder einzustellen und/oder zu verstellen. Die Steuereinheit kann konfiguriert sein, die dritte Koppeleinrichtung, insbesondere über das oder mit dem dritten Ventil oder die dritte Ventilanordnung oder den dritten Aktuator, in die erste oder zweite Position einzustellen und/oder zu verstellen, insbesondere auch von der ersten in die zweite Position zu bewegen und umgekehrt. Die Steuereinheit kann konfiguriert sein, die vierte Koppeleinrichtung, insbesondere über das oder mit dem vierten Ventil oder die vierte Ventilanordnung oder den vierten Aktuator, anzusteuern und/oder einzustellen und/oder zu verstellen. Die Steuereinheit kann konfiguriert sein, die vierte Koppeleinrichtung, insbesondere über das oder mit dem vierten Ventil oder die vierte Ventilanordnung oder den vierten Aktuator, in die erste oder zweite Position einzustellen und/oder zu verstellen, insbesondere auch von der ersten in die zweite Position zu bewegen und umgekehrt.

Die Antriebsanordnung weist die oben genannten Vorteile auf. Darüber hinaus ermöglichen diese Massnahmen vorteilhafterweise die Schaltung von verschiedenen Stufen oder Gängen oder Übersetzungen. Wie in Tabelle 1 beispielhaft dargestellt, können je nachdem wie die Koppeleinheiten geschaltet sind, sich also in der ersten oder zweiten Position befinden, nur Fahrantrieb, nur erster Leistungsausgang oder Fahrantrieb und erster Leistungsausgang oder verstärkter Fahrantrieb und/oder verstärkter erster Leistungsausgang verwendet werden. Die unterschiedlichen Drehzahlen des Fahrantriebs und/oder des ersten Leistungsausgangs oder die Geschwindigkeit der Arbeitsmaschine hängen von den zwischen der ersten und zweiten Energiemaschine gewählten Übersetzungsverhältnissen ab. Außerdem kann je nach Übersetzungsverhältnis der Fahrbereich eingeschränkt werden. Darüber hinaus basieren beispielsweise die in Tabelle 1 gezeigten Modi auf einer zweiten Energiemaschine mit höher Leistung als die erste Energiemaschine. Je nach Auslegung der Übersetzungsstufen und der Energiemaschinen muss, um eine synchronisierte Schaltung der Antriebsanordnung zu erreichen, eine bestimmte Reihenfolge eingehalten werden, wie die Koppeleinrichtungen geschaltet werden.

**Tabelle 1:** Die verschiedenen Stufen der Antriebsanordnung mit vier Koppeleinrichtungen

| Stufe | K1 | K2 | K3 | K4 | Zustand | Modus |
|---|---|---|---|---|---|---|
| 1 | Geschlossen | Geöffnet | Geöffnet | Geöffnet | Antrieb EM1 - Fahrantrieb | Nur Fahren |

(fortgesetzt)

| Stufe | K1 | K2 | K3 | K4 | Zustand | Modus |
|---|---|---|---|---|---|---|
| 2 | Geöffnet | Geöffnet | Geschlossen | Geöffnet | Antrieb EM2 - Fahrantrieb | Nur Fahren |
| 3 | Geschlossen | Geöffnet | Geschlossen | Geöffnet | Antrieb EM1 und EM2 - Fahrantrieb | Leistungssteigerung Fahren |
| 4 | Geöffnet | Geschlossen | Geöffnet | Geöffnet | Antrieb EM2 - erster Leistungsausgang | Nur Leistungsausgang |
| 5 | Geöffnet | Geöffnet | Geöffnet | Geschlossen | Antrieb EM1 - erster Leistungsausgang | Nur Leistungsausgang |
| 6 | Geöffnet | Geschlossen | Geöffnet | Geschlossen | Antrieb EM1 und EM2 - erster Leistungsausgang | Leistungssteigerung erster Leistungsausgang |
| 7 | Geschlossen | Geschlossen | Geöffnet | Geöffnet | Antrieb EM1 - Fahrantrieb und EM2 - erster Leistungsausgang | Fahren und Leistungsausgang |
| 8 | Geöffnet | Geöffnet | Geschlossen | Geschlossen | Antrieb EM2 - Fahrantrieb und EM1 - erster Leistungsausgang | Fahren und Leistungsausgang |
| 9 | Geschlossen | Geschlossen | Geschlossen | Geöffnet | Antrieb EM1 und EM2 - Fahrantrieb und EM2 - erster Leistungsausgang | Leistungssteigerung Fahren und Leistungsausgang |
| 10 | Geschlossen | Geschlossen | Geöffnet | Geschlossen | Antrieb EM1 - Fahrantrieb und EM1 und EM2-erster Leistungsausgang | Leistungssteigerung Fahren und Leistungsausgang |
| 11 | Geöffnet | Geschlossen | Geschlossen | Geschlossen | Antrieb EM2 - Fahrantrieb und EM1 und EM2-erster Leistungsausgang | Leistungssteigerung Fahren und Leistungsausgang |
| 12 | Geöffnet | Geschlossen | Geschlossen | Geöffnet | Antrieb EM2 - Fahrantrieb und erster Leistungsausgang | Leistungsausgang hohe Drehzahl |
| 13 | Geschlossen | Geöffnet | Geöffnet | Geschlossen | Antrieb EM1 - Fahrantrieb und erster Leistungsausgang | Leistungsausgang niedrige Drehzahl |
| 14 | Geöffnet | Geöffnet | Geöffnet | Geöffnet | Neutral, kein Antrieb | Neutral |

Bei einer möglichen Ausführungsform umfasst die Antriebsanordnung einen zweiten Leistungsausgang, insbesondere einen zweiten mechanischen Leistungsausgang. Der zweite Leistungsausgang kann die Hydraulik, insbesondere die Hydraulik der Arbeitsmaschine antreiben. Der zweite Leistungsausgang kann die zweite Ausgangswelle mit dem ersten Leistungsausgang gemeinsam umfassen. Alternativ kann der zweite Leistungsausgang eine dritte Ausgangswelle umfassen und/oder als dritte Ausgangswelle ausgebildet sein. Ebenso kann der zweite Leistungsausgang eine Pumpen- und/oder Kompressor-Einheit oder eine weitere Zapfwelleneinheit sein, die wie die Zapfwelleneinheit ausgebildet sein kann. Vorteilhafterweise können dadurch insgesamt zwei Leistungsausgänge und der Fahrantrieb realisiert und/oder unabhängig voneinander betrieben werden.

In Ausgestaltung der Erfindung ist die erste Energiemaschine, insbesondere nur die erste Energiemaschine, mit dem Fahrantrieb verbunden und die zweite Energiemaschine, insbesondere nur die zweite Energiemaschine, ist mit dem ersten und/oder zweiten Leistungsausgang verbunden, wenn ein Drehmoment der ersten Energiemaschine kleiner als der oder gleich dem Drehmomentschwellwert ist und/oder eine Drehzahl der ersten Energiemaschine kleiner als der oder gleich dem Drehzahlschwellwert ist, bevorzugt wenn ein Drehmoment der ersten Energiemaschine kleiner als der Drehmomentschwellwert ist und/oder eine Drehzahl der ersten Energiemaschine kleiner als der Drehzahlschwellwert ist. Somit kann im ersten Modus oder dem ersten Geschwindigkeitsbereich folgendes gelten, insbesondere kann im ersten Modus oder dem ersten Geschwindigkeitsbereich die Antriebsanordnung wie folgt betreibbar sein:

- Die erste Energiemaschine kann mit dem Fahrantrieb verbunden, insbesondere gekoppelt sein und diesen antreiben.
- Die zweite Energiemaschine kann mit dem ersten und/oder zweiten Leistungsausgang verbunden, insbesondere gekoppelt sein und diese(n) antreiben.

Im zweiten Modus oder dem ersten Geschwindigkeitsbereich, also wenn ein Drehmoment der ersten Energiemaschine grösser als der Drehmomentschwellwert ist und/oder eine Drehzahl der ersten Energiemaschine grösser als der Drehzahlschwellwert ist, kann folgendes gelten, insbesondere kann im zweiten Modus oder dem zweiten Geschwindigkeitsbereich die Antriebsanordnung wie folgt betreibbar sein:

- Alternativ oder zusätzlich kann die zweite Energiemaschine, insbesondere nur die zweite Energiemaschine, mit dem Fahrantrieb verbunden sein. Somit kann insbesondere die zweite Energiemaschine mit dem Fahrantrieb gekoppelt sein und diesen antreiben.
- Alternativ oder zusätzlich kann die erste Energiemaschine nicht mit dem Fahrantrieb verbunden, insbesondere vom Fahrantrieb entkoppelt sein.
- Alternativ oder zusätzlich kann die erste Energiemaschine mit dem ersten und/oder zweiten Leistungsausgang verbunden sein. Somit kann insbesondere die erste Energiemaschine mit dem ersten und/oder zweiten Leistungsausgang gekoppelt sein und diese antreiben.
- Alternativ oder zusätzlich kann die zweite Energiemaschine mit dem Fahrantrieb und dem ersten und/oder zweiten Leistungsausgang verbunden sein. Somit kann insbesondere die zweite Energiemaschine mit dem Fahrantrieb und dem ersten und/oder zweiten Leistungsausgang gekoppelt sein und diese(n) antreiben.

Die Antriebsanordnung kann eine fünfte Koppeleinrichtung umfassen. Die zweite Energiemaschine kann mit der fünften Koppeleinrichtung verbunden sein. Ausserdem kann die zweite Energiemaschine mit der oder durch die fünfte Koppeleinrichtung mit dem zweiten Leistungsausgang verbindbar oder verbunden sein. Die fünfte Koppeleinrichtung kann mit der zweiten oder dritten Ausgangswelle verbindbar oder verbunden sein.

Die fünfte Koppeleinrichtung kann jeweils zwischen einer ersten Position, insbesondere einem geschlossenen oder verbundenem oder gekoppelten Zustand, und einer zweiten Position, insbesondere einem geöffneten oder nicht verbundenem oder entkoppelten Zustand, bewegbar sein. In der ersten Position kann die fünfte Koppeleinrichtungen mit einer anderen Komponente, beispielsweise der zweiten oder dritten Ausgangswelle, verbunden sein. In der zweiten Position kann die fünfte Koppeleinrichtungen mit der anderen Komponente nicht verbunden sein, also von dieser gelöst sein.

Die zweite Energiemaschine kann mit der fünften oder durch die fünfte Koppeleinrichtung in der ersten Position mit dem zweiten Leistungsausgang, insbesondere der zweiten oder dritten Ausgangswelle verbunden sein, und in der zweiten Position nicht mit dem zweiten oder dritten Leistungsausgang, insbesondere der zweiten oder dritten Ausgangswelle, verbunden, also entkoppelt sein.

Die fünfte Koppeleinrichtung kann als eine Kupplung oder Synchronisierung ausgebildet sein, beispielsweise als eine oder eine Schaltkupplung oder eine Lamellenkupplung oder eine Synchronkupplung oder eine schaltbare Freilaufkupplung.

Die Antriebsanordnung kann eine fünfte Übersetzungsstufe, insbesondere eine fünfte Stirnradstufe oder einen fünften Zahnradsatz oder ein fünftes Zahnradpaar oder einen fünften Planetensatz umfassen. Die zweite Energiemaschine kann durch die fünfte oder mit der fünften Übersetzungsstufe mit der fünften Koppeleinrichtung verbunden sein.

Die fünfte Koppeleinrichtung kann mit der Steuereinheit signalverbunden und/oder wirkend gekoppelt und/oder signalübertragend und/oder datenleitend verbunden sein. Im Speziellen kann die Antriebsanordnung ein fünftes Ventil oder eine fünfte Ventilanordnung, insbesondere ein fünftes Steuerventil, oder einen fünften Aktuator zum Ansteuern und/oder Einstellen und/oder Verstellen der fünften Koppeleinrichtung umfassen. Das fünfte Ventil oder die fünfte Ventilanordnung oder der fünfte Aktuator können mit der fünften Koppeleinrichtung verbunden sein.

Die Steuereinheit kann mit dem fünften Ventil oder der fünften Ventilanordnung oder dem fünften Aktuator signalverbunden und/oder wirkend gekoppelt und/oder signalübertragend und/oder datenleitend verbunden sein. Die Steuereinheit kann konfiguriert sein, die fünfte Koppeleinrichtung, insbesondere über das oder mit dem fünften Ventil oder die fünfte Ventilanordnung oder den fünften Aktuator, anzusteuern und/oder einzustellen und/oder zu verstellen. Die Steuereinheit kann konfiguriert sein, die fünfte Koppeleinrichtung, insbesondere über das oder mit dem fünften Ventil oder die fünfte Ventilanordnung oder den fünften Aktuator, in die erste oder zweite Position einzustellen und/oder zu verstellen, insbesondere auch von der ersten in die zweite Position zu bewegen und umgekehrt. Die Antriebsanordnung weist die oben genannten Vorteile auf.

In Ausgestaltung der Erfindung umfasst die Antriebsanordnung einen dritten Energiemaschine. Die dritte Energiemaschine, insbesondere nur die dritte Energiemaschine, ist mit dem zweiten Leistungsausgang verbunden. Die dritte Energiemaschine kann mit dem zweiten Leistungsausgang verbunden sein, wenn ein Drehmoment der ersten Energiemaschine kleiner als der oder gleich dem Drehmomentschwellwert ist und/oder eine Drehzahl der ersten Energiemaschine kleiner als der oder gleich dem Drehzahlschwellwert ist, bevorzugt wenn ein Drehmoment der ersten Energiemaschine kleiner als der Drehmomentschwellwert ist und/oder eine Drehzahl der ersten Energiemaschine kleiner als der Drehzahlschwellwert ist. Der oder die Energiespeicher kann mit der dritten Energiemaschine verbunden und/oder koppelbar sein, insbesondere elektrisch verbunden und/oder elektrisch koppelbar sein.

Die dritte Energiemaschine kann als ein Elektromotor, insbesondere als ein dritter Elektromotor ausgebildet sein. Die dritte Energiemaschine kann aber auch eine Brennstoffzelle oder bevorzugt eine mit Gleichstrom und/oder Drehstrom betriebene Synchron- und/oder Asynchronmaschine mit permanenter und/oder elektrischer Erregung, besonders bevorzugt eine permanenterregte Drehstrom-Synchronmaschine sein. Die dritte Energiemaschine kann motorisch oder generatorisch betreibbar sein. Die dritte Energiemaschine kann die Antriebsanordnung mit einer Drehzahl und/oder einem Drehmoment antreiben. Die dritte Energiemaschine, insbesondere der dritte Elektromotor, kann ein dritte Antriebswelle umfassen.

Somit kann im ersten Modus oder dem ersten Geschwindigkeitsbereich folgendes gelten, insbesondere kann im ersten Modus oder dem ersten Geschwindigkeitsbereich die Antriebsanordnung wie folgt betreibbar sein:

- Die erste Energiemaschine kann mit dem Fahrantrieb verbunden, insbesondere gekoppelt sein und diesen antreiben.
- Die zweite Energiemaschine kann mit dem ersten Leistungsausgang verbunden, insbesondere gekoppelt sein und diesen antreiben.
- Die dritte Energiemaschine kann mit dem zweiten Leistungsausgang verbunden, insbesondere gekoppelt sein und diesen antreiben.

Im zweiten Modus oder dem zweiten Geschwindigkeitsbereich, also wenn ein Drehmoment der ersten Energiemaschine grösser als der Drehmomentschwellwert ist und/oder eine Drehzahl der ersten Energiemaschine grösser als der Drehzahlschwellwert ist, kann folgendes gelten, insbesondere kann im zweiten Modus oder dem zweiten Geschwindigkeitsbereich die Antriebsanordnung wie folgt betreibbar sein:

- Alternativ oder zusätzlich kann die zweite Energiemaschine, insbesondere nur die zweite Energiemaschine, mit dem Fahrantrieb verbunden sein. Somit kann insbesondere die zweite Energiemaschine mit dem Fahrantrieb gekoppelt sein und diesen antreiben.
- Alternativ oder zusätzlich kann die erste Energiemaschine nicht mit dem Fahrantrieb verbunden, insbesondere vom Fahrantrieb entkoppelt sein.
- Alternativ oder zusätzlich kann die erste Energiemaschine mit dem ersten und/oder zweiten Leistungsausgang verbunden sein. Somit kann insbesondere die erste Energiemaschine mit dem ersten und/oder zweiten Leistungsausgang gekoppelt sein und diese antreiben.
- Alternativ oder zusätzlich kann die dritte Energiemaschine mit dem ersten und/oder zweiten Leistungsausgang verbunden sein. Somit kann insbesondere die dritte Energiemaschine mit dem ersten und/oder zweiten Leistungsausgang gekoppelt sein und diese antreiben.
- Alternativ oder zusätzlich kann die zweite Energiemaschine mit dem Fahrantrieb und dem ersten und/oder zweiten Leistungsausgang verbunden sein. Somit kann insbesondere die zweite Energiemaschine mit dem Fahrantrieb und dem ersten und/oder zweiten Leistungsausgang gekoppelt sein und diese(n) antreiben.

Alternativ kann anstatt der zweiten Energiemaschine die dritte Energiemaschine mit der fünften Koppeleinrichtung verbunden sein. Ausserdem kann die dritte Energiemaschine mit der oder durch die fünfte Koppeleinrichtung mit dem zweiten Leistungsausgang, insbesondere der zweiten oder dritten Ausgangswelle, verbindbar oder verbunden sein.

Die Antriebsanordnung kann eine sechste Koppeleinrichtung umfassen. Die dritte Energiemaschine kann mit der sechsten Koppeleinrichtung verbunden sein. Ausserdem kann die dritte Energiemaschine mit der oder durch die sechste Koppeleinrichtung mit dem zweiten Leistungsausgang verbindbar oder verbunden sein. Die sechste Koppeleinrichtung kann mit der dritten Ausgangswelle verbindbar oder verbunden sein.

Die sechste Koppeleinrichtung kann zwischen einer ersten Position, insbesondere einem geschlossenen oder verbundenem oder gekoppelten Zustand, und einer zweiten Position, insbesondere einem geöffneten oder nicht verbundenem oder entkoppelten Zustand, bewegbar sein. Die dritte Energiemaschine kann mit der sechsten oder durch die sechste Koppeleinrichtung in der ersten Position mit dem zweiten Leistungsausgang, insbesondere der dritten Ausgangswelle verbunden sein, und in der zweiten Position nicht mit dem zweiten Leistungsausgang, insbesondere der dritten Ausgangswelle, verbunden sein.

Die sechste Koppeleinrichtung kann als eine Kupplung oder Synchronisierung ausgebildet sein, beispielsweise als eine oder eine Schaltkupplung oder eine Lamellenkupplung oder eine Synchronkupplung oder eine schaltbare Freilaufkupplung.

Die Antriebsanordnung kann eine sechste Übersetzungsstufe, insbesondere eine sechste Stirnradstufe oder einen sechsten Zahnradsatz oder ein sechstes Zahnradpaar oder einen sechsten Planetensatz umfassen. Die dritte Energiemaschine kann durch die sechste oder mit der sechsten Übersetzungsstufe mit der sechsten Koppeleinrichtung verbunden sein.

Die sechste Koppeleinrichtung kann mit der Steuereinheit signalverbunden und/oder wirkend gekoppelt und/oder signalübertragend und/oder datenleitend verbunden sein. Im Speziellen kann die Antriebsanordnung ein sechstes Ventil oder eine sechste Ventilanordnung, insbesondere ein sechstes Steuerventil, oder einen sechsten Aktuator zum Ansteuern und/oder Einstellen und/oder Verstellen der sechsten Koppeleinrichtung umfassen. Das sechste Ventil oder die sechste Ventilanordnung oder der sechste Aktuator können mit der sechsten Koppeleinrichtung verbunden sein.

Die Steuereinheit kann mit dem sechsten Ventil oder der sechsten Ventilanordnung oder dem sechsten Aktuator signalverbunden und/oder wirkend gekoppelt und/oder signalübertragend und/oder datenleitend verbunden sein. Die Steuereinheit kann konfiguriert sein, die sechste Koppeleinrichtung, insbesondere über das oder mit dem sechsten Ventil oder die sechste Ventilanordnung oder den sechsten Aktuator, anzusteuern und/oder einzustellen und/oder zu verstellen, bevorzugt in die erste oder zweite Position einzustellen und/oder zu verstellen, besonders bevorzugt auch von der ersten in die zweite Position zu bewegen und umgekehrt. Die Antriebsanordnung weist die oben genannten Vorteile auf.

In Ausgestaltung der Erfindung umfasst der erste Leistungsausgang ein erstes Winkelgetriebe und/oder der zweite Leistungsausgang ein zweites Winkelgetriebe. In Ausgestaltung der Erfindung sind der erste Elektromotor und der Fahrantrieb, insbesondere die erste Ausgangswelle, und/oder der zweite Elektromotor und der Fahrantrieb, insbesondere die erste Ausgangswelle, und/oder dritte Elektromotor und der Fahrantrieb, insbesondere die erste Ausgangswelle, koaxial oder parallel zueinander angeordnet. Im Speziellen können die Rotationsachsen des ersten Elektromotors und/oder des zweiten Elektromotors und/oder des dritten Elektromotors und des Fahrantriebs, insbesondere die erste Ausgangswelle, koaxial oder parallel zueinander angeordnet.

Die Erfindung betrifft weiter eine Achse, insbesondere eine elektrisch angetriebene Achse, für eine Arbeitsmaschine, umfassend eine Antriebsanordnung, insbesondere eine Antriebsanordnung nach einem der Ansprüche 1 bis 10. Die Antriebsanordnung kann an der Achse angeordnet oder in die Achse integriert sein.

Die Erfindung betrifft weiter eine Arbeitsmaschine, umfassend eine Achse, insbesondere eine Achse nach Anspruch 11, oder eine Antriebsanordnung, insbesondere eine Antriebsanordnung nach einem der Ansprüche 1 bis 10. Die Arbeitsmaschine kann eine Baumaschine oder ein Zugfahrzeug, bevorzugt ein landwirtschaftliches Zugfahrzeug, beispielsweise ein Traktor oder Schlepper sein. Die Arbeitsmaschine weist die oben beschriebenen Vorteile der Antriebsanordnung auf.

Die Arbeitsmaschine umfasst die Antriebsanordnung. Die Antriebsanordnung ist zum Antreiben der Arbeitsmaschine ausgebildet. Die Arbeitsmaschine kann eine, zwei oder mehrere Achse(n) umfassen. Im Speziellen kann die Arbeitsmaschine eine erste und eine zweite Fahrzeugachse umfassen. Die Achse, insbesondere in die erste und/oder zweite Fahrzeugachse kann die Antriebsanordnung umfassen. Im Speziellen kann die Antriebsanordnung in die Achse, insbesondere in die erste und/oder zweite Fahrzeugachse integriert sein. Die Arbeitsmaschine kann mit einer Drehzahl und/oder Kraft und/oder einem Drehmoment der ersten und/oder zweiten und/oder dritten Energiemaschine antreibbar sein. Die erste Fahrzeugachse kann dabei eine Vorderachse, insbesondere eine lenkbare Vorderachse, und/oder die zweite Fahrzeugachse eine Hinterachse sein.

Die Steuereinheit kann zur Steuerung und/oder Regelung, insbesondere zum Einstellen und/oder Verstellen, der Arbeitsmaschine, insbesondere des ersten und zweiten Modus, eingerichtet sein. Die Arbeitsmaschine kann eine Ein- und Ausgabeeinheit umfassen. Die Steuereinheit kann mit der Ein- und Ausgabeeinheit signalverbunden und/oder wirkend gekoppelt und/oder signalübertragend und/oder datenleitend verbunden sein, und/oder mit der Ein- und Ausgabeeinheit ansteuerbar und/oder einstellbar und/oder verstellbar sein. Die Ein- und Ausgabeeinheit kann in die Steuereinheit oder umgekehrt integriert sein. Der Bediener der Arbeitsmaschine kann mit der oder durch die Ein- und Ausgabeeinheit beispielsweise eine Geschwindigkeit der Arbeitsmaschine einstellen und/oder verstellen.

Die Arbeitsmaschine kann ausserdem eines oder mehrere Hilfsaggregate umfassen, beispielsweise eine Pumpe und/oder einen Kühler etc.. Die Hilfsaggregate können ein Bestandteil der Hydraulik des Antriebsanordnung sein. Die Arbeitsmaschine kann den ersten Leistungsausgang, insbesondere die Zapfwelleneinheit umfassen. Die Steuereinheit kann konfiguriert sein, die Antriebsanordnung und/oder die Achse und/oder Arbeitsmaschine mit einem Fahrsignal einzustellen und/oder zu verstellen und/oder anzusteuern und mit dem oder basierend auf dem Fahrsignal eine Geschwindigkeit des Zugfahrzeugs einzustellen und/oder zu verstellen, insbesondere zu erhöhen oder zu verringern. Die Arbeitsmaschine kann das oder die Bodeneingriffsmittel umfassen. Die Bodeneingriffsmittel können die Arbeitsmaschine auf dem Boden abstützen und/oder tragen. Ein Zugfahrzeugrahmen der Arbeitsmaschine kann sich auf die Bodeneingriffsmittel abstützen. Die Bodeneingriffsmittel können Räder oder Raupen oder Ketten sein. Die Bodeneingriffsmittel können insbesondere Vorderräder und Hinterräder sein.

Die Arbeitsmaschine kann einen Geschwindigkeitssensor, beispielsweise einen Drehzahlsensor, zur Erfassung einer Geschwindigkeit der Arbeitsmaschine umfassen. Die Steuereinheit kann konfiguriert sein, die Antriebsanordnung und/oder die Achse und/oder die Arbeitsmaschine, insbesondere die erste und/oder zweite und/oder dritte Energiemaschine und/oder die Zapfwelleneinheit einzustellen und/oder zu verstellen und/oder anzusteuern, beispielsweise indem die Steuereinheit konfiguriert ist, die Ventile und/oder Ventilanordnungen dieser Komponenten einzustellen und/oder zu verstellen und/oder anzusteuern. Im Speziellen kann die Steuereinheit konfiguriert sein, eine Kraft und/oder ein Drehmoment und/oder eine Drehzahl der ersten und/oder zweiten und/oder dritten Energiemaschine einzustellen und/oder zu verstellen und/oder anzusteuern.

Die Antriebsanordnung oder die Achse oder die Arbeitsmaschine kann eine Leistungselektronik umfassen. Die Leistungselektronik und/oder der Energiespeicher kann/können in der Steuereinheit integriert sein oder als externe Einheit(en) von der Steuereinheit ansteuerbar sein. Die Leistungselektronik kann ein elektronisches Steuergerät und/oder einen Inverter und/oder einen Spannungswandler umfassen. Im Betrieb kann der Inverter die Spannung und/oder Strom des Energiespeichers in eine Spannung oder Energie oder Leistung umwandeln, welche die Energiemaschine und/oder der Stator benötigen. Zum Aufladen des Energiespeichers kann dieser Vorgang umgekehrt werden. Die Steuereinheit kann eine Recheneinheit, einen Computer, einen Prozessor, einen Speicher und/oder alle Software, Hardware, Algorithmen, Anschlüsse, insbesondere auch Sensoren, umfassen, die für die Einstellung und/oder Verstellung der ersten und/oder zweiten und/oder dritte Energiemaschine erforderlich sind. Der Energiespeicher kann von einer geeigneten Steuerelektronik ansteuerbar sein, um elektrische Energie und/oder Leistung zu speichern und/oder an die erste und/oder zweite und/oder dritte Energiemaschine abzugeben. Die Steuereinheit und/oder die erste und/oder zweite und/oder dritte Energiemaschine können mit der Leistungselektronik und/oder dem Energiespeicher elektrisch verbunden und/oder elektrisch koppelbar sein. Ausserdem kann über oder mit der Leistungselektronik die Versorgung der Antriebsanordnung, insbesondere der ersten und/oder zweiten und/oder dritten Energiemaschinen und/oder des Energiespeichers mit Spannung und/oder Strom und/oder Energie und/oder Leistung gesteuert und/oder einstellbar und/oder verstellbar sein.

Die erste Koppeleinrichtung, insbesondere das erste Ventil oder die erste Ventileinrichtung oder der erste Aktuator, und/oder die zweite Koppeleinrichtung, insbesondere das zweite Ventil oder die zweite Ventileinrichtung oder der zweite Aktuator, und/oder die dritte Koppeleinrichtung, insbesondere das dritte Ventil oder die dritte Ventileinrichtung oder der dritte Aktuator, und/oder die vierte Koppeleinrichtung, insbesondere das vierte Ventil oder die vierte Ventileinrichtung oder der vierte Aktuator, und/oder die fünfte Koppeleinrichtung, insbesondere das fünfte Ventil oder die fünfte Ventileinrichtung oder der fünfte Aktuator, und/oder die sechste Koppeleinrichtung, insbesondere das sechste Ventil oder die sechste Ventileinrichtung oder der sechste Aktuator, und/oder der Energiespeicher und/oder die Leistungselektronik und/oder die erste und/oder zweite und/oder dritte Energiemaschine und/oder der erste Leistungsausgang, insbesondere die Zapfwelleneinheit, können mit der Steuereinheit betreibbar, bevorzugt steuerbar und/oder regelbar, besonders bevorzugt ansteuerbar und/oder einstellbar und/oder verstellbar sein. Die Steuereinheit kann Signale zur Steuerung des Betriebs der Antriebsanordnung und/oder der Achse und/oder der Arbeitsmaschine versenden und/oder empfangen. Zweckmäßigerweise können die Signale über ein geeignetes Datenkommunikationsnetzwerk bereitgestellt werden, beispielsweise eines, das dem ISOBUS- und/oder CAN-Standard entspricht. Die Steuereinheit kann als ein elektronisches Modul, ein eingebettetes System, eine Recheneinheit, ein Computer, als ein Modul zum Steuern und/oder Regeln der Antriebsanordnung und/oder der Achse und/oder der Arbeitsmaschine ausgebildet sein. Die Steuereinheit kann einen oder mehrere Prozessoren, einen Speicher und/oder alle Software, Hardware, Algorithmen, Anschlüsse, insbesondere auch Sensoren, umfassen, die für die Steuerung und/oder Regelung der Antriebsanordnung und/oder der Achse und/oder der Arbeitsmaschine erforderlich sind. Verfahren können als Programm oder Algorithmus ausgebildet sein, welches auf und/oder mit der Steuereinheit ausführbar sind. Die Steuereinheit kann jedes Gerät umfassen, das Daten von verschiedenen Sensoren analysiert, Daten vergleichen und die erforderlichen Entscheidungen treffen, um den Betrieb der Antriebsanordnung und/oder der Achse und/oder der Arbeitsmaschine und die erforderlichen Aufgaben zur Steuerung und/oder Regelung des Betriebs der Antriebsanordnung und/oder der Achse und/oder der Arbeitsmaschine, zu steuern und/oder zu regeln und/oder auszuführen. Die Steuereinheit kann mit den Bauteilen der Antriebsanordnung und/oder der Achse und/oder der Arbeitsmaschine, also insbesondere dem Fahrantrieb und/oder dem ersten Leistungsausgang, insbesondere der Zapfwelleneinheit, und/oder die erste Koppeleinrichtung, insbesondere das erste Ventil oder die erste Ventileinrichtung oder der erste Aktuator, und/oder die zweite Koppeleinrichtung, insbesondere das zweite Ventil oder die zweite Ventileinrichtung oder der zweite Aktuator, und/oder die dritte Koppeleinrichtung, insbesondere das dritte Ventil oder die dritte Ventileinrichtung oder der dritte Aktuator, und/oder die vierte Koppeleinrichtung, insbesondere das vierte Ventil oder die vierte Ventileinrichtung oder der vierte Aktuator, und/oder die fünfte Koppeleinrichtung, insbesondere das fünfte Ventil oder die fünfte Ventileinrichtung oder der fünfte Aktuator, und/oder die sechste Koppeleinrichtung, insbesondere das sechste Ventil oder die sechste Ventileinrichtung oder der sechste Aktuator, und/oder der Energiespeicher und/oder die Leistungselektronik und/oder die erste und/oder zweite und/oder dritte Energiemaschine die Sensoren, beispielsweise der Geschwindigkeitssensor und/oder der oder den Drehzahl- und/oder Drehmomentsensor(en) signalverbunden und/oder wirkend gekoppelt und/oder signalübertragend und/oder datenleitend verbunden sein. Unter einer signalverbunden und/oder wirkend gekoppelten und/oder signalübertragenden und/oder datenleitenden Verbindung kann dabei unter anderem verstanden werden, dass ein Austausch von Signalen bzw. Daten zwischen den verbundenen Bauteilen und der Steuereinheit stattfinden kann. Signale können beispielsweise von der Steuereinheit empfangen und versendet werden und/oder verarbeitet und/oder bearbeitet werden. Die Verbindung zwischen der Steuereinheit sowie den Bauteilen bzw. Komponenten der Antriebsanordnung und/oder der Achse und/oder der Arbeitsmaschine kann kabelgebunden, insbesondere also mit Kabel, und/oder kabellos, also per Funk, beispielsweise mit Bluetooth oder WLAN realisiert sein. Die Kommunikation kann beispielsweise mittels Isobus, CAN-Bus oder ähnlichem erfolgen. Die Steuereinheit kann unmittelbar mit der an oder in der Arbeitsmaschine angeordneten Ein- und Ausgabeeinheit in Verbindung stehen, durch welche von einer Bedienperson eingegebene Daten an die Steuereinheit übertragen oder von dieser empfangen und ausgegeben werden können. Die Steuereinheit kann in die Ein- und Ausgabeeinheit integriert sein, oder umgekehrt.

Die Erfindung kann weiter ein Verfahren zum Betreiben der Antriebsanordnung, insbesondere nach einem der Ansprüche 1 bis 10, und/oder der Achse, insbesondere nach Anspruch 11, und/oder der Arbeitsmaschine, insbesondere nach Anspruch 12, betreffen.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:

Fig. 1    eine schematische Darstellung eines ersten Ausführungsbeispiels einer erfindungsgemässen Arbeitsmaschine, insbesondere eines landwirtschaftlichen Zugfahrzeugs in Form eines Ackerschleppers, und

Fig. 2    eine schematische Darstellung des ersten Ausführungsbeispiels der erfindungsgemässen Antriebsanordnung, und

Fig. 3    eine schematische Darstellung eines zweiten Ausführungsbeispiels der erfindungsgemässen Antriebsanordnung, und

Fig. 4    eine schematische Darstellung eines dritten Ausführungsbeispiels der erfindungsgemässen Antriebsanordnung, und

Fig. 5    eine schematische Darstellung eines vierten Ausführungsbeispiels der erfindungsgemässen Antriebsanordnung.

Fig. 6    eine schematische Darstellung eines fünften Ausführungsbeispiels der erfindungsgemässen Antriebsanordnung.

Fig. 7    eine schematische Darstellung eines sechsten Ausführungsbeispiels der erfindungsgemässen Antriebsanordnung.

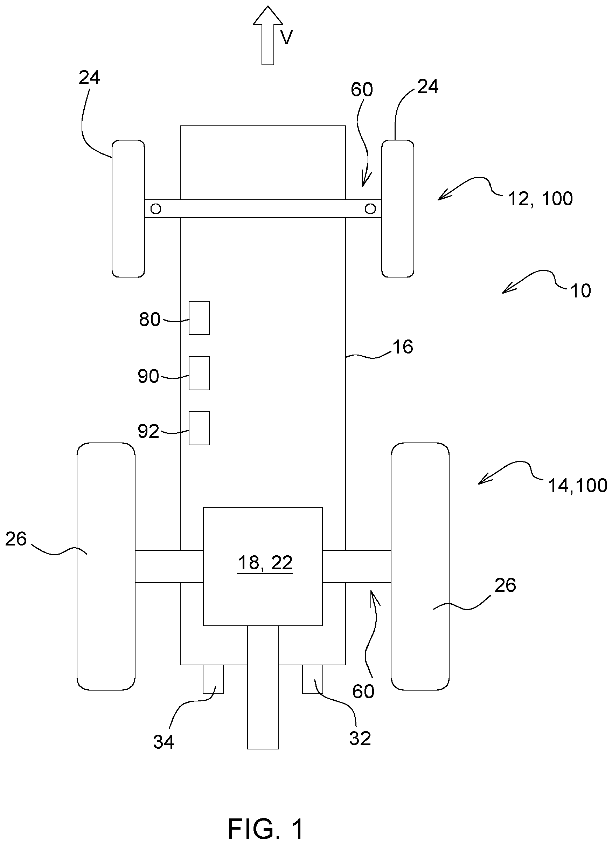

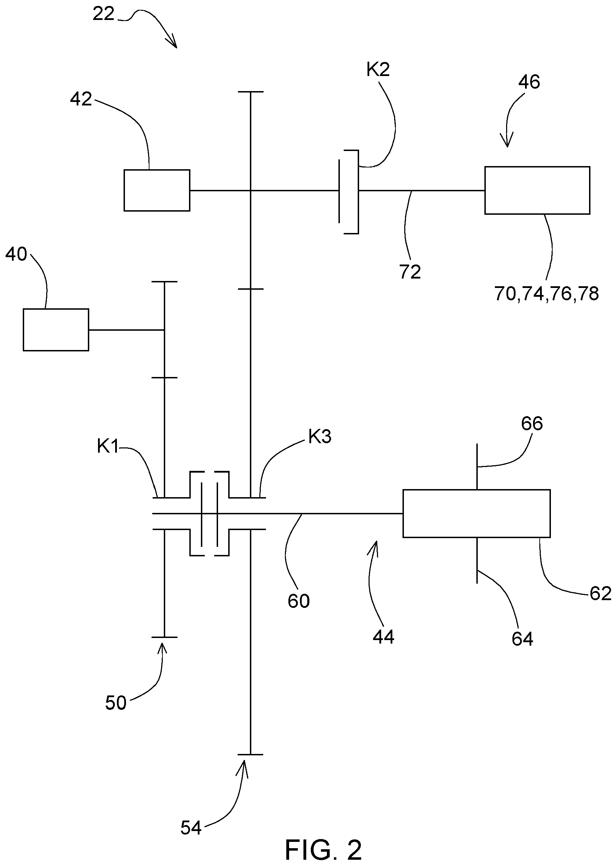

Die Figur 1 zeigt eine schematische Darstellung eines ersten Ausführungsbeispiels einer Arbeitsmaschine 10, insbesondere eines landwirtschaftlichen Zugfahrzeugs, das in Form eines Ackerschleppers bzw. Traktors ausgeführt ist. Die in einer Vorwärtsrichtung V, beispielsweise über ein Feld, bewegbar Arbeitsmaschine 10 umfasst ein tragendes Gestell 16, das sich durch zwei Achsen 100 auf dem Erdboden abstützt. Die zwei Achsen 100 sind als eine erste Fahrzeugachse 12, hier eine lenkbare Vorderachse mit Bodeneingriffsmitteln 24 ausgebildet, und eine zweite Fahrzeugachse 14, hier als antreibbare Hinterachse mit Bodeneingriffsmitteln 26 ausgebildet. Die Arbeitsmaschine 10 umfasst eine Antriebsanordnung 22. Die Arbeitsmaschine 10, insbesondere die Antriebsanordnung 22 oder die Achse 100, kann einen Energiespeicher 18, hier beispielsweise eine Batterie (Akkumulator) umfassen. Der Energiespeicher 18 kann elektrisch mit der Antriebsanordnung 22, insbesondere einer ersten und/oder zweiten und/oder dritten Energiemaschine 40, 42, 202 (siehe Figuren 2 bis 7) der Antriebsanordnung 22 verbunden sein. Die Antriebsanordnung 22 ist zum mechanischen Antrieb eines Fahrantriebs 44, insbesondere der Achse 100, hier der zweiten Fahrzeugachse 14, und/oder eines ersten Leistungsausgangs 32 ausgebildet. Der erste Leistungsausgang 32 kann als Zapfwelleneinheit ausgebildet sein, und kann zum Antreiben eines Arbeitsgeräts (nicht gezeigt) vorgesehen sein, das über eine Schnittstelle 34 (z.B. Dreipunktschnittstelle) an der Arbeitsmaschine 10 anbringbar ist. Die Achse 100, vorliegend die zweite Fahrzeugachse 14, kann die Antriebsanordnung 22 umfassen. Es kann aber jede Achse 100, insbesondere die erste und/oder zweite Fahrzeugachse 12, 14 jeweils eine Antriebsanordnung 22 umfassen. Die Arbeitsmaschine 10, insbesondere alternativ aber auch die Achse 100 oder die Antriebsanordnung 22, kann eine Steuereinheit 80 und/oder eine Ein- und Ausgabeeinheit 90 umfassen. Die Steuereinheit 80 ist mit der ersten und/oder zweiten und/oder dritten Energiemaschine 40, 42, 202 signalverbunden und/oder wirkend gekoppelt und/oder signalübertragend und/oder datenleitend verbunden. Die Steuereinheit 80 ist konfiguriert, die Drehzahl und/oder das Drehmoment der Antriebsanordnung 22, insbesondere der Energiemaschinen 40, 42, 202, einzustellen und/oder zu verstellen. Die Steuereinheit 80 kann konfiguriert sein, eine vorgebbare Drehzahl und/oder ein vorgebbares Drehmoment der Antriebsanordnung 22, insbesondere der Energiemaschinen 40, 42, 202, einzustellen und/oder zu verstellen. Die Steuereinheit 80 kann aber auch mit dem Energiespeicher 18 und/oder einer Leistungselektronik 92 der Arbeitsmaschine 10, insbesondere alternativ der Achse 100 oder der Antriebsanordnung 22, und/oder Sensoren der Antriebsanordnung 22, insbesondere alternativ der Achse 100 oder der Arbeitsmaschine 10, signalverbunden und/oder wirkend gekoppelt und/oder signalübertragend und/oder datenleitend verbunden sein. Die Steuereinheit 80 kann konfiguriert sein, die Antriebsanordnung 22 und/oder die Arbeitsmaschine 10 und/oder die Achse 100 einzustellen und/oder zu verstellen, bevorzugt die Drehzahl und/oder das Drehmoment des ersten Leistungsausgangs 32 und/oder des Fahrantriebs 44, insbesondere der Ausgangswelle 60, einzustellen und/oder zu verstellen.

Der Energiespeicher 18 versorgt die elektrisch angetriebenen Elemente der Antriebsanordnung 22, vgl. die Figuren 2 bis 7, insbesondere eine erste und/oder zweite und/oder dritte Energiemaschine 40, 42, 202, mit Energie, insbesondere mit Strömen bzw. Spannungen geeigneter Frequenz und Amplituden, um gewünschte Ausgangsdrehzahlen oder -Drehmomente für den Fahrantrieb 44, und somit die zweite Fahrzeugachse 14, und den ersten Leistungsausgang 32 bereitzustellen. Die Leistungselektronik 92 kann mit der ersten und/oder zweiten und/oder dritten Energiemaschine 40, 42, 202 und/oder dem Energiespeicher 18 elektrisch verbunden und/oder elektrisch koppelbar sein. Die erste und/oder zweite und/oder dritte Energiemaschine 40, 42, 202 und der Fahrantrieb 44, insbesondere die erste Ausgangswelle 60, können koaxial oder parallel zueinander angeordnet sein.

Figur 2 zeigt eine schematische Darstellung des ersten Ausführungsbeispiels der erfindungsgemässen Antriebsanordnung 22. Die in Figur 2 gezeigte Antriebsanordnung 22 entspricht im Wesentlichen der in Figur 1 Antriebsanordnung 22, sodass im Folgenden lediglich auf Details und/oder Unterschiede eingegangen wird. Die in Figur 1 dargestellte Arbeitsmaschine 10 kann die in Figur 2 dargestellte Antriebsanordnung 22 umfassen.

Die Antriebsanordnung 22 umfasst eine erste und eine zweite Energiemaschine 40, 42 sowie einen Fahrantrieb 44 und einem ersten Leistungsausgang 46. Im ersten Modus, wenn das Drehmoment der ersten Energiemaschine 40 kleiner als der oder gleich dem Drehmomentschwellwert ist und/oder die Drehzahl der ersten Energiemaschine 40 kleiner als der oder gleich dem Drehzahlschwellwert ist, ist die erste Energiemaschine 40 mit dem Fahrantrieb 44 und die zweite Energiemaschine 42 mit dem ersten Leistungsausgang 46 verbunden, also insbesondere mit diesen gekoppelt und treibt diese an. Im zweiten Modus, wenn das Drehmoment der ersten Energiemaschine 40 grösser als der Drehmomentschwellwert ist und/oder die Drehzahl der ersten Energiemaschine 40 grösser als der Drehzahlschwellwert ist, ist die zweite Energiemaschine 42 mit dem Fahrantrieb 44 verbunden, also insbesondere mit diesem gekoppelt und treibt diesen an. Darüber hinaus kann im zweiten Modus alternativ die zweite Energiemaschine 42 mit dem Fahrantrieb 44 und dem ersten Leistungsausgang 44 verbunden sein, also insbesondere mit diesen gekoppelt sein und diese antreiben.

Die Antriebsanordnung 22 umfasst eine erste Koppeleinrichtung K1, wobei die erste Energiemaschine 40 mit der ersten Koppeleinrichtung K1 verbunden ist. Die erste Energiemaschine 40 ist mit der ersten oder durch die erste Koppeleinrichtung K1 mit dem Fahrantrieb 44 verbindbar oder verbunden. Die Antriebsanordnung 22 umfasst ausserdem eine zweite Koppeleinrichtung K2. Die zweite Energiemaschine 42 ist mit der zweiten oder durch die zweite Koppeleinrichtung K2 mit dem ersten Leistungsausgang 46 verbindbar oder verbunden. Die Antriebsanordnung 22 umfasst ausserdem eine dritte Koppeleinrichtung K3. Die zweite Energiemaschine 42 ist mit der dritten oder durch die dritte Koppeleinrichtung K3 mit dem Fahrantrieb 44 verbindbar.

Die Antriebsanordnung 22 umfasst ausserdem eine erste und dritte Übersetzungsstufe 50, 54. Die erste Energiemaschine 40 ist durch die erste oder mit der ersten Übersetzungsstufe 50 mit der ersten Koppeleinrichtung K1 verbunden. Die zweite Energiemaschine 42 ist durch die dritte oder mit der dritten Übersetzungsstufe 54 mit der dritten Koppeleinrichtung K3 verbunden.

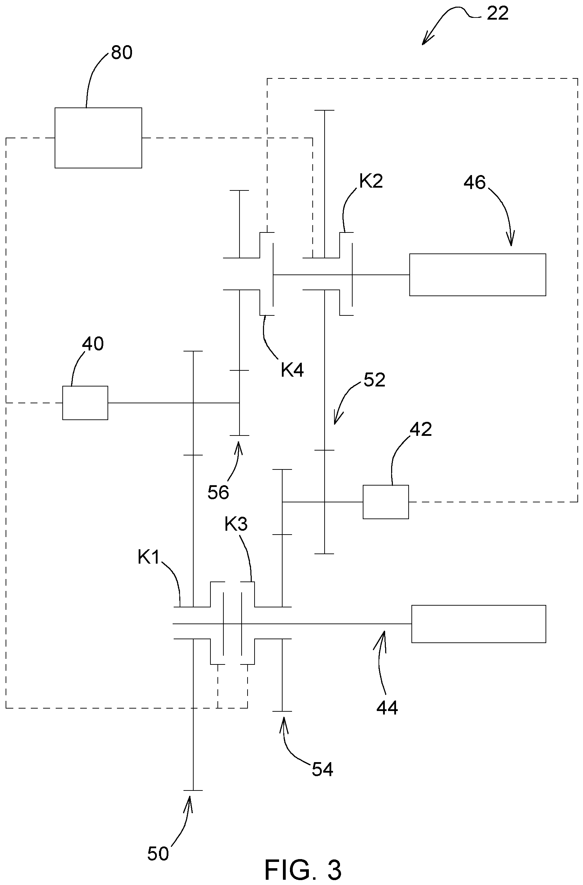

Die erste und zweite und dritte Koppeleinrichtung K1, K2, K3 sind mit der Steuereinheit 80 (siehe Figur 3) verbunden, insbesondere signalverbunden und/oder wirkend gekoppelt und/oder signalübertragend und/oder datenleitend verbunden sein.

Die erste, zweite und dritte Koppeleinrichtung K1, K2, K3 können zwischen der ersten Position und der zweiten Position einstellbar und/oder verstellbar sein, insbesondere auch von der ersten in die zweite Position und umgekehrt bewegbar sein (Details siehe oben).

Der Fahrantrieb 44 ist als eine erste Ausgangswelle 60 und ein Differenzialgetriebe 62 ausgebildet. Der Fahrantrieb 44 kann aber auch nur die erste Ausgangswelle 60 umfassen und/oder als erste Ausgangswelle 60 ausgebildet sein. Das Differenzialgetriebe 62 ist antriebsseitig mit der ersten Ausgangswelle 60 verbunden. Ausserdem kann das Differenzialgetriebe 62 abtriebsseitig mit einer linken Welle 64 und einer rechten Welle 66 zum Antrieb von Bodeneingriffsmitteln 26 der Achse 14, 100 verbunden sein. Die erste Ausgangswelle 60 kann als eine Hohlwelle ausgebildet sein, die insbesondere die linke und/oder rechte Welle 64, 66 teilweise oder vollständig umschliesst. Die Wellen 64, 66 sind starr mit den Abtrieben des Differenzialgetriebes 62 verbunden.

Die Antriebsanordnung 22 umfasst den ersten Leistungsausgang 46. Der erste Leistungsausgang 46 kann als eine Zapfwelleneinheit 70 ausgebildet sein und/oder diese umfassen. Die Zapfwelleneinheit 70 kann ein Zapfwellengetriebe 74 und/oder eine Zapfwelle 76 und/oder die zweite Ausgangswelle 72 umfassen. Die Zapfwelleneinheit 70, insbesondere das Zapfwellengetriebe 74, kann antriebsseitig mit der zweiten Ausgangswelle 72 verbunden sein. Ausserdem kann die Zapfwelleneinheit 70 abtriebsseitig mit der Zapfwelle 76 verbunden sein. Der erste Leistungsausgang 46 kann aber auch nur die zweite Ausgangswelle 72 umfassen und/oder als zweite Ausgangswelle 72 ausgebildet sein. Der erste Leistungsausgang 46 kann ausserdem ein erstes Winkelgetriebe 76 und/oder ein zweites Winkelgetriebe 78 umfassen. Ebenso kann ein zweiter Leistungsausgang 200 das zweites Winkelgetriebe 78 umfassen.

Figur 3 zeigt eine schematische Darstellung eines zweiten Ausführungsbeispiels der erfindungsgemässen Antriebsanordnung 22. Die in Figur 3 gezeigte Antriebsanordnung 22 entspricht im Wesentlichen der in den Figuren 1 und 2 gezeigten Antriebsanordnung 22, sodass im Folgenden lediglich auf Details und/oder Unterschiede eingegangen wird. Die in Figur 1 dargestellte Arbeitsmaschine 10 kann die in Figur 3 dargestellte Antriebsanordnung 22 umfassen.

Die Antriebsanordnung 22 umfasst eine vierte Koppeleinrichtung K4, wobei die erste Energiemaschine 40 mit der vierten Koppeleinrichtung K4 verbunden ist. Die erste Energiemaschine 40 ist mit der vierten oder durch die vierte Koppeleinrichtung K4 mit dem ersten Leistungsausgang 46 verbindbar oder verbunden. Die Antriebsanordnung 22 umfasst ausserdem eine zweite und vierte Übersetzungsstufe 52, 56. Die erste Energiemaschine 40 ist durch die vierte oder mit der vierten Übersetzungsstufe 56 mit der vierten Koppeleinrichtung K4 verbunden. Die zweite Energiemaschine 42 ist durch die zweite oder mit der zweite Übersetzungsstufe 52 mit der zweiten Koppeleinrichtung K2 verbunden. Die vierte Koppeleinrichtung K4 kann ebenfalls zwischen der ersten Position und der zweiten Position einstellbar und/oder verstellbar sein, insbesondere auch von der ersten in die zweite Position und umgekehrt bewegbar sein (Details siehe oben).

Die erste, zweite, dritte und vierte Koppeleinrichtung K1, K2, K3, K4 sind mit der Steuereinheit 80 verbunden, insbesondere signalverbunden und/oder wirkend gekoppelt und/oder signalübertragend und/oder datenleitend verbunden sein (siehe gestrichelte Linie). Im Speziellen kann die Antriebsanordnung 22, insbesondere die erste Koppeleinrichtung K1, ein erstes Ventil oder eine erste Ventilanordnung (nicht gezeigt), insbesondere ein erstes Steuerventil, oder einen ersten Aktuator zum Ansteuern und/oder Einstellen und/oder Verstellen der ersten Koppeleinrichtung K1 umfassen. Ebenso kann die Antriebsanordnung, insbesondere die zweite Koppeleinrichtung K2, ein zweites Ventil oder eine zweite Ventilanordnung (nicht gezeigt), insbesondere ein zweites Steuerventil, oder einen zweiten Aktuator zum Ansteuern und/oder Einstellen und/oder Verstellen der zweiten Koppeleinrichtung K2 umfassen. Ebenso kann die Antriebsanordnung, insbesondere die dritte Koppeleinrichtung K3, ein drittes Ventil oder eine dritte Ventilanordnung (nicht gezeigt), insbesondere ein drittes Steuerventil, oder einen dritten Aktuator zum Ansteuern und/oder Einstellen und/oder Verstellen der dritten Koppeleinrichtung K3 umfassen. Ebenso kann die Antriebsanordnung, insbesondere die vierte Koppeleinrichtung K4, ein viertes Ventil oder eine vierte Ventilanordnung (nicht gezeigt), insbesondere ein viertes Steuerventil, oder einen vierten Aktuator zum Ansteuern und/oder Einstellen und/oder Verstellen der vierten Koppeleinrichtung K4 umfassen. Die Steuereinheit kann mit dem ersten und/oder zweiten und/oder dritten und/oder vierten Ventil und/oder der ersten und/oder zweiten und/oder dritten und/oder vierten Ventilanordnung und/oder dem ersten und/oder zweiten und/oder dritten und/oder vierten Aktuator signalverbunden und/oder wirkend gekoppelt und/oder signalübertragend und/oder datenleitend verbunden sein. Die Steuereinheit kann konfiguriert sein, die Koppeleinrichtungen K1, K2, K3, K4, insbesondere über die Ventile oder die Ventilanordnungen, anzusteuern und/oder einzustellen und/oder zu verstellen, bevorzugt in die erste Position oder zweite Position einzustellen und/oder zu verstellen, insbesondere auch von der ersten in die zweite Position und umgekehrt zu bewegen.

Die Steuereinheit 80 ist mit der ersten und zweiten Energiemaschine 40, 42 signalverbunden und/oder wirkend gekoppelt und/oder signalübertragend und/oder datenleitend verbunden sein. Die Steuereinheit kann konfiguriert sein, die Antriebsanordnung 22, insbesondere die erste und zweite Energiemaschine 40, 42, in Abhängigkeit von der Drehzahl und/oder dem Drehmoment in den ersten oder zweiten Modus einzustellen und/oder zu verstellen, insbesondere im ersten oder zweiten Modus zu betreiben. Die Steuereinheit 80 kann konfiguriert sein, die Antriebsanordnung 22 und somit auch die Arbeitsmaschine 10 mit dem oder in Abhängigkeit von der Drehzahl und/oder Drehmoment der ersten Energiemaschine 40 einzustellen und/oder zu verstellen und/oder anzusteuern, insbesondere also zu steuern und zu regeln. Die Steuereinheit 80 kann mit der gleichen Funktionalität und Verbindungen insbesondere auch in den Ausführungsformen der Figuren 1, 2 und 4 bis 5 vorhanden sein, auch wenn die Steuereinheit 80 nicht gezeigt ist.

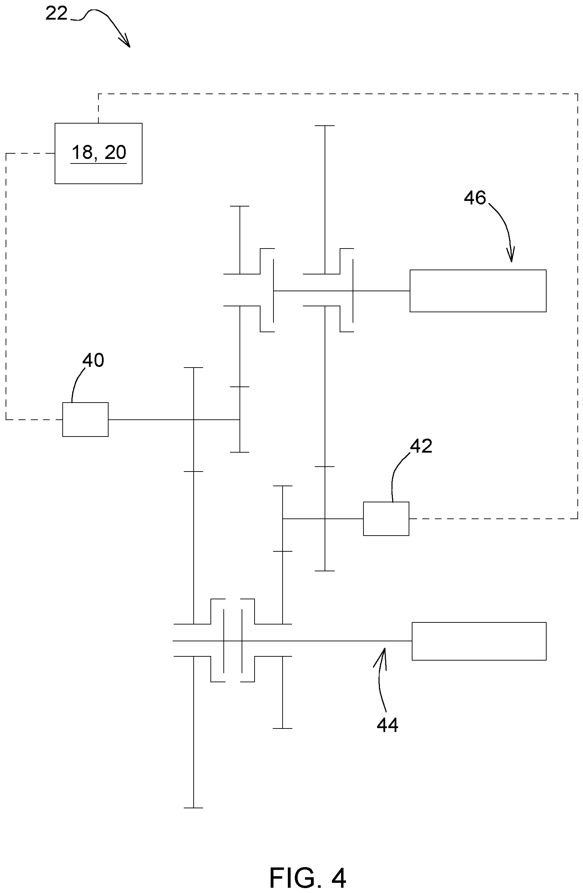

Figur 4 zeigt eine schematische Darstellung eines dritten Ausführungsbeispiels der erfindungsgemässen Antriebsanordnung 22. Die in Figur 4 gezeigte Antriebsanordnung 22 entspricht im Wesentlichen der in den Figuren 1 bis 3 gezeigten Antriebsanordnung 22, sodass im Folgenden lediglich auf Details und/oder Unterschiede eingegangen wird. Die in Figur 1 dargestellte Arbeitsmaschine 10 kann die in Figur 4 dargestellte Antriebsanordnung 22 umfassen.

Das Arbeitsfahrzeug 10 wird in der dargestellten Ausführungsform rein elektrisch angetrieben, wozu ein Energiespeicher 18, hier eine Batterie (Akkumulator) dient. Der Energiespeicher 18 ist elektrisch mit einer Antriebsanordnung 22 verbunden. Die Energieversorgung der Antriebsanordnung 22 erfolgt elektrisch über den Energiespeicher 18. Die Steuereinheit 80 kann mit dem Energiespeicher verbunden sein. Ebenso kann der Energiespeicher 18 eine Steuerung 20 umfassen. Die Steuerung 20 kann konfiguriert sein, den Energiespeicher einzustellen und/oder zu verstellen. Die Steuerung 20 kann konfiguriert sein, die elektrisch angetriebenen Elemente der Antriebsanordnung 22 mit Strömen bzw. Spannungen geeigneter Frequenz und Amplituden versorgen.

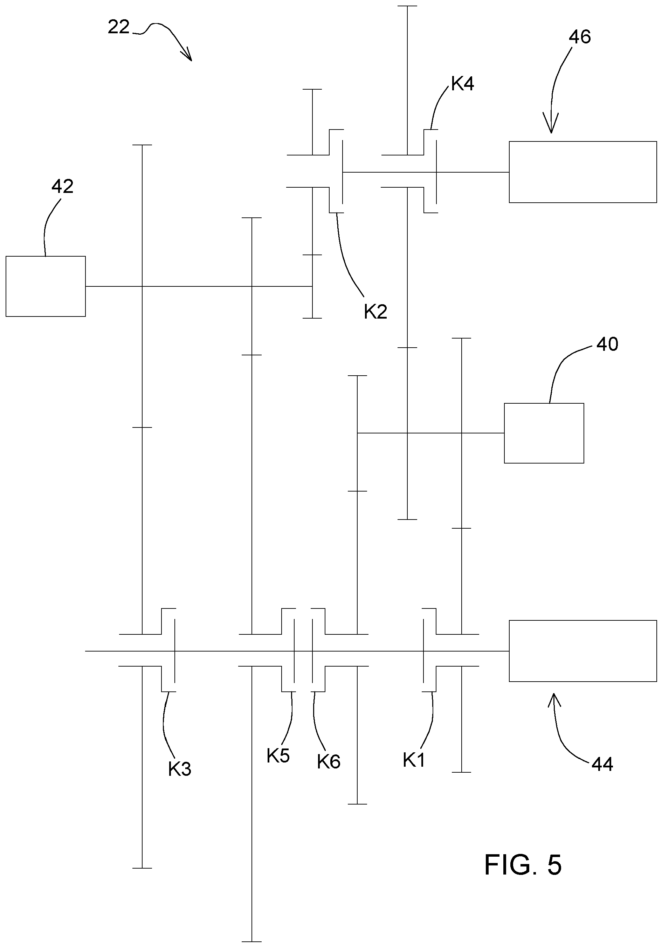

Figur 5 zeigt eine schematische Darstellung eines vierten Ausführungsbeispiels der erfindungsgemässen Antriebsanordnung 22. Die in Figur 5 gezeigte Antriebsanordnung 22 entspricht im Wesentlichen der in den Figuren 1 bis 4 gezeigten Antriebsanordnung 22, sodass im Folgenden lediglich auf Details und/oder Unterschiede eingegangen wird. Die in Figur 1 dargestellte Arbeitsmaschine 10 kann die in Figur 5 dargestellte Antriebsanordnung 22 umfassen.

Um eine Antriebsanordnung 22 mit mehr als 2 Gängen für den Fahrantrieb zu realisieren, kann diese mehr Koppeleinrichtungen und Übersetzungsstufen umfassen, die mit dem Fahrantrieb 44 verbindbar oder verbunden sind. Es ist jedoch wichtig, dass die ungeraden und geraden Gänge separaten Energiemaschinen zugewiesen werden, um das nahtlose Schalten zwischen den Gängen zu ermöglichen. Figur 5 zeigt eine Antriebsanordnung 22 mit 3-Gängen mit einer ersten und dritten Drehzahl, welche über die erste Energiemaschine 40 realisiert werden und eine zweite Drehzahl, die über die zweite Energiemaschine 42 realisiert wird. Das Schalten des Fahrantriebs 44 des ersten Leistungsausgangs 46 kann nahtlos erfolgen.

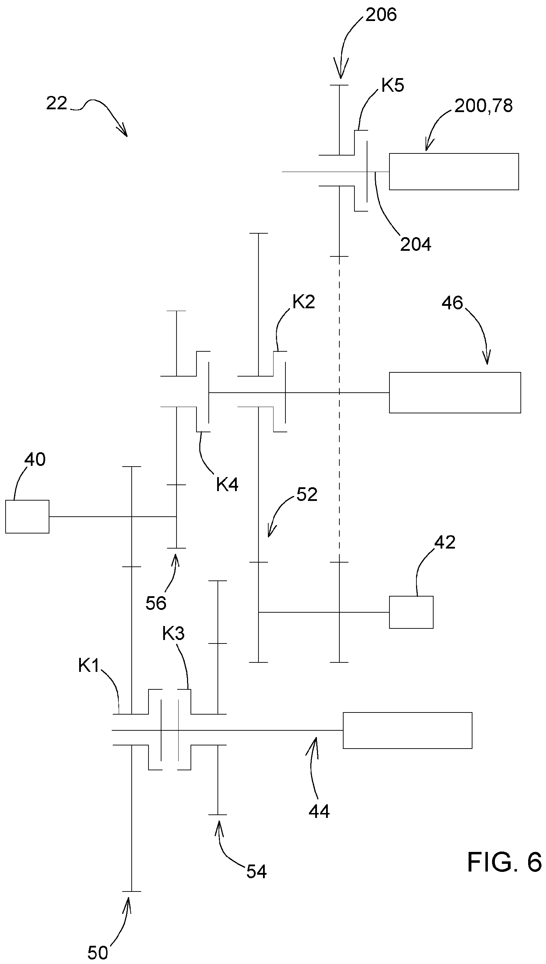

Figur 6 zeigt eine schematische Darstellung eines fünften Ausführungsbeispiels der erfindungsgemässen Antriebsanordnung 22. Die in Figur 6 gezeigte Antriebsanordnung 22 entspricht im Wesentlichen der in den Figuren 1 bis 5 gezeigten Antriebsanordnung 22, sodass im Folgenden lediglich auf Details und/oder Unterschiede eingegangen wird. Die in Figur 1 dargestellte Arbeitsmaschine 10 kann die in Figur 6 dargestellte Antriebsanordnung 22 umfassen.

Die Antriebsanordnung 22 umfasst einen zweiten Leistungsausgang 200. Der zweite Leistungsausgang 200 kann eine dritte Ausgangswelle 204 umfassen und/oder als dritte Ausgangswelle 204 ausgebildet sein. Der zweite Leistungsausgang 200 als eine weitere Zapfwelleneinheit ausgebildet sein bzw. diese umfassen. Die weitere Zapfwelleneinheit kann identisch zur Zapfwelleneinheit ausgebildet sein. Alternativ oder zusätzlich kann der zweite Leistungsausgang 200 mit der Hydraulik, beispielsweise einer Pumpen- und/oder Kompressor-Einheit verbunden sein. Der zweite Leistungsausgang 200 kann das zweites Winkelgetriebe 78 umfassen.

Die erste Energiemaschine 40 ist mit dem Fahrantrieb 44 und die zweite Energiemaschine 42 mit dem ersten und/oder zweiten Leistungsausgang 46, 200 verbunden, wenn eine Drehzahl n der ersten Energiemaschine 40 kleiner als der oder gleich dem Drehzahlschwellwert $n_{schwell}$ ist, bevorzugt wenn eine Drehzahl n der ersten Energiemaschine 40 kleiner als der Drehzahlschwellwert $n_{schwell}$ ist, und die zweite Energiemaschine 42 ist mit dem Fahrantrieb 44 verbunden, wenn eine Drehzahl n der ersten Energiemaschine 40 grösser als der Drehzahlschwellwert $n_{schwell}$ ist.

Die zweite Energiemaschine 42 kann mit der fünften oder durch die fünfte Koppeleinrichtung K5 in der ersten Position mit dem zweiten Leistungsausgang 200, insbesondere der zweiten oder dritten Ausgangswelle 72, 204 verbunden sein, und in der zweiten Position nicht mit dem zweiten oder dritten Leistungsausgang 46, 200, insbesondere der zweiten oder dritten Ausgangswelle 72, 204, verbunden, also entkoppelt sein. Die Antriebsanordnung 22 kann eine fünfte Übersetzungsstufe 206 umfassen. Die zweite Energiemaschine 42 kann durch die fünfte oder mit der fünften Übersetzungsstufe 206 mit der fünften Koppeleinrichtung K5 verbunden sein.

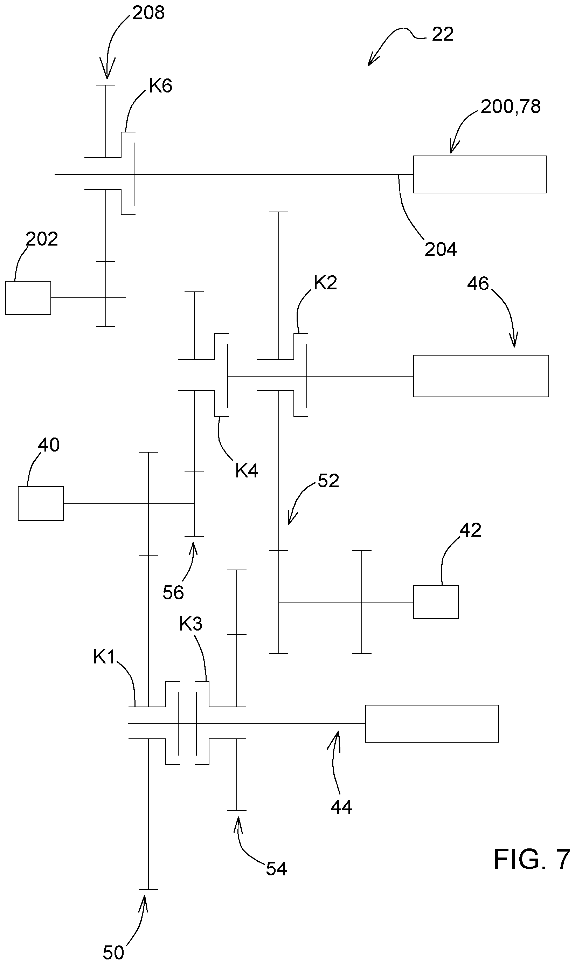

Figur 7 zeigt eine schematische Darstellung eines sechsten Ausführungsbeispiels der erfindungsgemässen Antriebsanordnung 22. Die in Figur 7 gezeigte Antriebsanordnung 22 entspricht im Wesentlichen der in den Figuren 1 bis 6 gezeigten Antriebsanordnung 22, sodass im Folgenden lediglich auf Details und/oder Unterschiede eingegangen wird. Die in Figur 1 dargestellte Arbeitsmaschine 10 kann die in Figur 7 dargestellte Antriebsanordnung 22 umfassen.

Die Antriebsanordnung 22 umfasst eine dritte Energiemaschine 202. Die dritte Energiemaschine 202 ist mit dem zweiten Leistungsausgang 200 verbunden. Alternativ oder zusätzlich kann die dritte Energiemaschine 202 mit dem zweiten Leistungsausgang 200 verbunden sein, wenn eine Drehzahl n der ersten Energiemaschine 40 kleiner als der oder gleich dem Drehzahlschwellwert $n_{schwell}$ ist, bevorzugt wenn eine Drehzahl n der ersten Energiemaschine 40 kleiner als der Drehzahlschwellwert $n_{schwell}$ ist.

Die dritte Energiemaschine 202 kann mit der sechsten oder durch die sechste Koppeleinrichtung K6 in der ersten Position mit dem zweiten Leistungsausgang 200, insbesondere der zweiten oder dritten Ausgangswelle 72, 204 verbunden sein, und in der zweiten Position nicht mit dem zweiten oder dritten Leistungsausgang 46, 200, insbesondere der zweiten oder dritten Ausgangswelle 72, 204, verbunden, also entkoppelt sein.

Die Antriebsanordnung 22 kann die sechste Übersetzungsstufe 208 umfassen. Die dritte Energiemaschine 202 kann durch die sechste oder mit der sechsten Übersetzungsstufe 206 mit der sechsten Koppeleinrichtung K6 verbunden sein. Der erste und/oder zweite und/oder dritte Elektromotor 40, 42, 200 und/oder der Fahrantrieb 44 können koaxial oder parallel zueinander angeordnet sein.

Alle gezeigten Ausführungen der Antriebsanordnung 22 zeichnen sich durch einen kompakten Aufbau und/oder ihre Schaltbarkeit, insbesondere eine synchronisierte und/oder eine nahtlose Schaltbarkeit aus.

**Patentansprüche**

1.  Antriebsanordnung (22) für eine Arbeitsmaschine (10), umfassend

    eine erste und eine zweite Energiemaschine (40, 42) ,
    und einen Fahrantrieb (44) und einen ersten Leistungsausgang (46),
    wobei die erste Energiemaschine (40) mit dem Fahrantrieb (44) und die zweite Energiemaschine (42) mit dem ersten Leistungsausgang (46) verbunden ist, wenn eine Drehzahl (n) der ersten Energiemaschine (40) kleiner als ein oder gleich einem Drehzahlschwellwert ($n_{schwell}$) ist, und die zweite Energiemaschine (42) mit dem Fahrantrieb (44) verbunden ist, wenn eine Drehzahl (n) der ersten Energiemaschine (40) grösser als der Drehzahlschwellwert ($n_{schwell}$) ist.

2.  Antriebsanordnung (22) nach Anspruch 1, wobei die zweite Energiemaschine (42) mit dem Fahrantrieb (44) und dem ersten Leistungsausgang (46) verbunden ist, wenn die Drehzahl (n) der ersten Energiemaschine (40) grösser als der Drehzahlschwellwert ($n_{schwell}$) ist.

3.  Antriebsanordnung (22) nach Anspruch 1 oder 2, wobei die Antriebsanordnung (22) eine erste Koppeleinrichtung (K1) umfasst, wobei die erste Energiemaschine (40) mit der ersten Koppeleinrichtung (K1) verbunden ist und mit der ersten Koppeleinrichtung (K1) mit dem Fahrantrieb (44) verbindbar ist und die Antriebsanordnung (22) eine zweite Koppeleinrichtung (K2) umfasst, wobei die zweite Energiemaschine (42) mit der zweiten Koppeleinrichtung (K2) verbunden ist und mit der zweiten Koppeleinrichtung (K2) mit dem ersten Leistungsausgang (46) verbindbar ist.

4.  Antriebsanordnung (22) nach mindestens einem der vorangehenden Ansprüche, wobei die Antriebsanordnung (22) eine dritte Koppeleinrichtung (K3) umfasst, und die zweite Energiemaschine (42) mit der dritten Koppeleinrichtung (K3) verbunden ist und mit der dritten Koppeleinrichtung (K3) mit dem Fahrantrieb (44) verbindbar ist

5.  Antriebsanordnung (22) nach mindestens einem der vorangehenden Ansprüche, wobei die Antriebsanordnung (22) eine vierte Koppeleinrichtung (K4) umfasst und die erste Energiemaschine (40) mit der vierten Koppeleinrichtung (K4) verbunden ist, und die erste Energiemaschine (40) mit der vierten Koppeleinrichtung (K4) mit dem ersten Leistungsausgang (46) verbindbar ist.

6.  Antriebsanordnung (22) nach mindestens einem der vorangehenden Ansprüche, wobei die Antriebsanordnung (22) einen zweiten Leistungsausgang (200) umfasst.

7.  Antriebsanordnung (22) nach Anspruch 6, wobei die erste Energiemaschine (40) mit dem Fahrantrieb (44) und die zweite Energiemaschine (42) mit dem ersten und/oder zweiten Leistungsausgang (46, 200) verbunden ist, wenn eine Drehzahl (n) der ersten Energiemaschine (40) kleiner als der oder gleich dem Drehzahlschwellwert ($n_{schwell}$) ist, und die zweite Energiemaschine (42) ist mit dem Fahrantrieb (44) verbunden, wenn eine Drehzahl (n) der ersten Energiemaschine grösser als der Drehzahlschwellwert ($n_{schwell}$) ist.

8.  Antriebsanordnung (22) nach Anspruch 6, wobei die Antriebsanordnung (22) eine dritten Energiemaschine (202) umfasst, und die dritte Energiemaschine (202) mit dem zweiten Leistungsausgang (200) verbunden ist.

9.  Antriebsanordnung (22) nach mindestens einem der vorangehenden Ansprüche, wobei der erste Leistungsausgang (46) ein erstes Winkelgetriebe (76) und/oder ein zweites Winkelgetriebe (78) oder der zweite Leistungsausgang (200) ein zweites Winkelgetriebe (78) umfasst.

10. Antriebsanordnung (22) nach mindestens einem der vorangehenden Ansprüche, wobei der erste und/oder zweite und/oder dritte Elektromotor (40, 42, 200) und der Fahrantrieb (44) koaxial oder parallel zueinander angeordnet sind.

11. Achse für eine Arbeitsmaschine (10), umfassend eine Antriebsanordnung (22) nach einem der Ansprüche 1 bis 10.

**12.** Arbeitsmaschine, umfassend eine Achse nach Anspruch 11 oder eine Antriebsanordnung nach einem der Ansprüche 1 bis 10.

FIG. 1

22

42

40

K2

46

70,74,76,78

72

K1

K3

66

62

64

60

44

50

54

FIG. 2

FIG. 3

FIG. 4

FIG. 5

FIG. 6

FIG. 7

| | Europäisches Patentamt European Patent Office Office européen des brevets | | **EUROPÄISCHER RECHERCHENBERICHT** | **Nummer der Anmeldung** EP 24 18 8295 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2002 356116 A (ISEKI AGRICULT MACH) 10. Dezember 2002 (2002-12-10) * Absätze [0071] - [0074]; Abbildungen 1,2A,2B * ----- | 1,2, 10-12 | INV. B60K17/28 B60K1/02 |
| X | US 2023/099321 A1 (HANNON BERT [BE] ET AL) 30. März 2023 (2023-03-30) | 1-5, 10-12 | |
| Y | * Zeilen 16-21; Abbildungen 1,2,3,5 * ----- | 6-9 | |
| X | CN 109 733 174 A (UNIV JIANGSU) 10. Mai 2019 (2019-05-10) * Absätze [0033], [0034]; Abbildungen 1,2 * ----- | 1-5, 10-12 | |
| Y | US 2024/217343 A1 (ONO KOHEI [JP]) 4. Juli 2024 (2024-07-04) * Absatz [0041]; Abbildung 3 * ----- | 6-8 | |
| Y | CN 106 828 064 A (UNIV CHINA AGRICULTURAL) 13. Juni 2017 (2017-06-13) * Abbildung 1 * ----- | 9 | RECHERCHIERTE SACHGEBIETE (IPC) B60K |

Der vorliegende Recherchenbericht wurde für alle Patentansprüche erstellt

| Recherchenort | Abschlußdatum der Recherche | Prüfer |
|---|---|---|
| München | 14. November 2024 | Martínez Hurtado, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 24 18 8295

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-11-2024

| Im Recherchenbericht angeführtes Patentdokument | Datum der Veröffentlichung | Mitglied(er) der Patentfamilie | Datum der Veröffentlichung |
|---|---|---|---|
| JP 2002356116 A | 10-12-2002 | KEINE | |
| US 2023099321 A1 | 30-03-2023 | CN 115839393 A | 24-03-2023 |
| | | DE 102022123891 A1 | 23-03-2023 |
| | | US 2023099321 A1 | 30-03-2023 |
| CN 109733174 A | 10-05-2019 | KEINE | |
| US 2024217343 A1 | 04-07-2024 | EP 4397520 A1 | 10-07-2024 |
| | | JP 2024096587 A | 17-07-2024 |
| | | US 2024217343 A1 | 04-07-2024 |
| CN 106828064 A | 13-06-2017 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20230227106 A1
- DE 102008032848 A1
- DE 102020114063 A1
- DE 102017205149 A1
- EP 1466773 A2
- DE 102019106294 A1